# EUROPEAN PATENT APPLICATION

(11) **EP 4 426 039 A1**
(43) Date of publication of application: **04.09.2024**
(21) Application number: 22959968.3
(22) Date of filing: 28.09.2022
(51) Int. Cl.: H04W 72/04, H04W 52/14

(54) **DATA TRANSMISSION METHOD AND APPARATUS, AND BASE STATION DEVICE**

(71) Applicant: New H3C Technologies Co., Ltd., Hangzhou, Zhejiang 310052 (CN)
(72) Inventor: KONG, Lei, Beijing 100102 (CN); ZHOU, Lei, Beijing 100102 (CN)
(74) Representative: Bandpay & Greuter
(86) International application number: PCT/CN2022/122312
(87) International publication number: WO 2024/065325

(57) **Abstract**

The present disclosure provides a data transmission method and apparatus, and a base station. The method includes: determining an overlapping between a sub-band full duplex (SBFD) time-frequency resource and an uplink time-frequency resource; based on the overlapping and a full duplex (FD) capability of a user equipment (UE), selecting an available time-frequency resource from the SBFD time-frequency resource; and transmitting downlink data corresponding to a physical downlink shared channel (PDSCH) on the available time-frequency resource. Through the technical solution of present disclosure, resource utilization can be improved.

## Description

### TECHNICAL FIELD

The present disclosure relates to the field of communication, and in particular to a data transmission method and apparatus, and a base station.

### BACKGROUND

A time division duplex (TDD) system is widely used in mobile communication systems, such as 5G systems. In the TDD system, a frame structure is divided into downlink (DL) slots, uplink (UL) slots, and special (S) slots. The DL slot includes multiple DL symbols, and downlink data is processed in a time-domain resource corresponding to these DL symbols. The UL slot includes multiple UL symbols, and uplink data is processed in a time-domain resource corresponding to these UL symbols. The S slot includes at least one flexible (F) symbol. The F symbol can be used for DL, i.e., downlink data is processed in the time-domain resource corresponding to the F symbol. The F symbol can also be used for UL, i.e., uplink data is processed in the time-domain resource corresponding to the F symbol. The F symbol can also be used for guard period (GP), i.e., protecting of uplink and downlink switching is performed in the time-domain resource corresponding to the F symbol. The TDD system can operate in half duplex (HD) mode. That is, at the same time, a same time-domain resource can only be used for UL or DL.

### SUMMARY

The present disclosure provides a data transmission method, applied to a base station. The method includes: determining an overlapping between a sub-band full duplex (SBFD) time-frequency resource and an uplink time-frequency resource; based on the overlapping and a full duplex (FD) capability of a user equipment (UE), selecting an available time-frequency resource from the SBFD time-frequency resource; and transmitting downlink data corresponding to a physical downlink shared channel (PDSCH) on the available time-frequency resource.

The present disclosure provides a data transmission apparatus, applied to a base station. The apparatus includes: a determining module, configured to determine an overlapping between a sub-band full duplex (SBFD) time-frequency resource and an uplink time-frequency resource; an obtaining module, configured to select, based on the overlapping and a full duplex (FD) capability of a user equipment (UE), an available time-frequency resource from the SBFD time-frequency resource; and a transmitting module, configured to transmit downlink data corresponding to a physical downlink shared channel (PDSCH) on the available time-frequency resource.

The present disclosure provides a base station, including a processor and a machine readable storage medium, where the machine readable storage medium stores machine executable instructions executable by the processor; the processor is configured to execute the machine executable instructions to implement the above data transmission method.

As can be seen from the above technical solution, the downlink data corresponding to the physical downlink shared channel (PDSCH) can be transmitted on the sub-band full duplex (SBFD) time-frequency resource, thereby more effectively utilizing the SBFD time-frequency resource, improving resource utilization, improving network coverage and network capacity, and reducing transmission delay, such as reducing downlink transmission delay.

### BRIEF DESCRIPTION OF THE DRAWINGS

FIG. 1 is a flowchart of a data transmission method in an example of the present disclosure.
FIG. 2 is a schematic diagram of scheduling PDSCH in a SBFD time-frequency resource.
FIG. 3 is a schematic diagram of a PRACH uplink time-frequency resource and a SBFD time-frequency resource.
FIG. 4 is a schematic diagram of non-overlapping between time-frequency resources in the same symbol.
FIG. 5 is a schematic diagram of a SBFD time-frequency resource overlapping with a SRS uplink time-frequency resource.
FIG. 6 is a schematic diagram of a repetition of PDSCH overlapping with a SRS uplink time-frequency resource.
FIG. 7 is a schematic diagram of a SBFD time-frequency resource overlapping with a PUCCH uplink time-frequency resource.
FIG. 8 is a schematic diagram of a repetition of PDSCH overlapping with a PUCCH uplink time-frequency resource.
FIG. 9 is a schematic structural diagram of a base station in an example of the present disclosure.

### DETAILED DESCRIPTION OF THE EMBODIMENTS

Terms used in the embodiments of the present disclosure are for the purpose of describing specific embodiments only, and are not intended to limit the present disclosure. The singular forms "a" ("an"), "the" and "this" used in the embodiments of the present disclosure and the appended claims are also intended to include plural forms, unless the context clearly indicates other meanings. It should also be understood that the term "and/or" as used herein refers to and includes any and all possible combinations of one or more of the associated listed items.

It should be understood that although terms first, second, third, etc. may be used in the embodiments of the present disclosure to describe various information, such information should not be limited to these terms. These terms are only used to distinguish the same type of information from each other. For example, first information may also be referred to as second information, and similarly, the second information may also be referred to as the first information without departing from the scope of the present disclosure. Depending on the context, the word "if" as used herein can be interpreted as "at the time of", "when" or "in response to determining".

In a time division duplex (TDD) system, a frame structure is divided into downlink (DL) slots, uplink (UL) slots, and special (S) slots. The DL slot includes multiple DL symbols, and downlink data is processed in a time-domain resource corresponding to these DL symbols. The UL slot includes multiple UL symbols, and uplink data is processed in a time-domain resource corresponding to these UL symbols. The S slot includes at least one flexible (F) symbol. The F symbol can be used for DL, UL, or guard period (GP). At present, the TDD system can operate in half duplex (HD) mode. That is, at the same time, a same time-domain resource can only be used for UL or DL. In order to use the time domain resource more flexibly and improve resource utilization, the TDD system can also operate in full duplex (FD) mode. That is, at the same time, a same time-domain resource can only be used for both UL and DL. In other words, uplink data and downlink data are processed simultaneously on the same time-domain resource.

In the TDD system, once the frame structure is determined, a user equipment (UE) can transmit and receive data according to the frame structure. The frame structure is divided into DL slots, UL slots and S slots. For a UE using HD mode, a base station schedules the UE to transmit or receive based on frame structure. For a UE using FD mode, the base station schedules transmission, reception, or simultaneous transmission and reception of the UE based on the frame structure.

To sum up, the base station can configure the frame structure and notify the UE of the frame structure, so that the UE can know the frame structure, so that data can be transmitted and received correctly. From another point of view, after knowing the frame structure, the UE can also know possible interference between UEs. Thus, some interference cancellation techniques can be adopted to reduce interference caused by other UEs, and the reliability of communication can be improved.

In an example, in the TDD system, for a frame structure with the main focus on uplink transmission, there are usually many UL slots configured, which leads to fewer DL slots, resulting in limited downlink transmission rate and increased transmission delay of downlink data. This results in downlink transmission delay to increase, which is not conducive to downlink services.

In an example of the present disclosure, there is provided a data transmission method, which can transmit downlink data corresponding to a physical downlink shared channel (PDSCH) on a sub-band full duplex (SBFD) time-frequency resource. That is, the method can transmit the downlink data corresponding to the PDSCH by using the uplink slot or F slot, thereby improving downlink transmission rate and reducing transmission delay of downlink data.

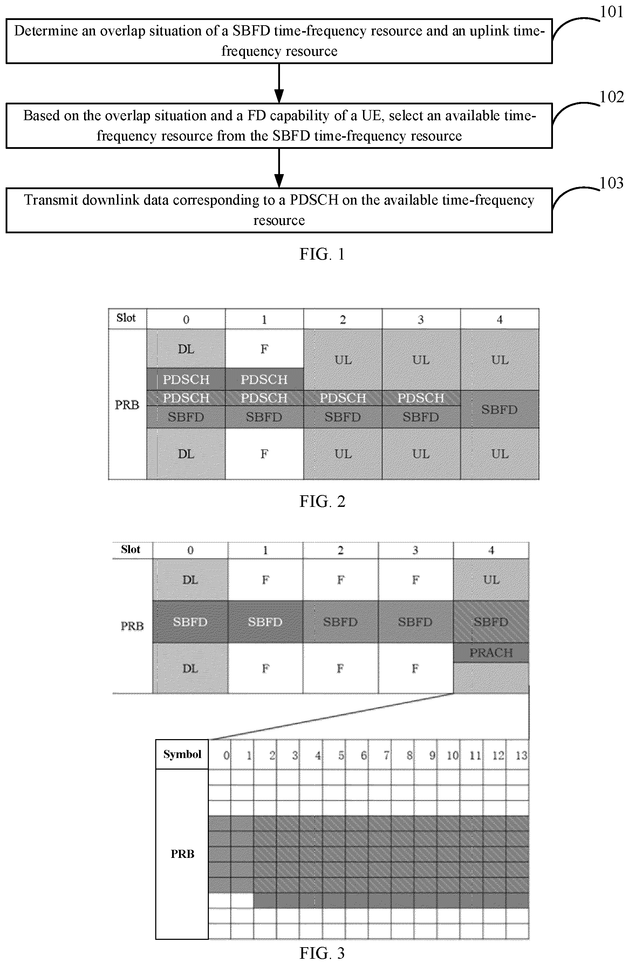

In an example of the present disclosure, there is provided a data transmission method, which can be applied to a base station. FIG. 1 is a flowchart of the data transmission method. The method can include steps 101 to 103.

In step 101: an overlapping between a SBFD time-frequency resource and an uplink time-frequency resource is determined.

In step 102: based on the overlapping and a FD capability of a UE, an available time-frequency resource is selected from the SBFD time-frequency resource. The FD capability includes a FD mode or a non-FD mode. A UE that supports the FD mode is a full duplex UE. A UE that does not support the FD mode is a half duplex UE.

In step 103: downlink data corresponding to a PDSCH is transmitted on the available time-frequency resource.

In an example, if the overlapping is that a first slot in the SBFD time-frequency resource does not overlap with a second slot in the uplink time-frequency resource, when the FD capability is a FD mode or a non-FD mode, the first slot in the SBFD time-frequency resource can be selected as the available time-frequency resource.

In an example, if the overlapping is that a first slot in the SBFD time-frequency resource overlaps with a second slot in the uplink time-frequency resource, and physical resource blocks (PRBs) in the first slot overlap with PRBs in the second slot, the available time-frequency resource can be selected from the SBFD time-frequency resource based on the FD capability of the UE and a signal type or a channel type carried on the uplink time-frequency resource.

In an example, if the overlapping is that a first slot in the SBFD time-frequency resource overlaps with a second slot in the uplink time-frequency resource, and PRBs in the first slot do not overlap with PRBs in the second slot, when the FD capability is a FD mode, the PRBs in the first slot can be selected as the available time-frequency resource; when the FD capability is a non-FD mode, the available time-frequency resource can be selected from the SBFD time-frequency resource based on the FD capability of the UE and a signal type or a channel type carried on the uplink time-frequency resource.

In an example, the signal type or the channel type carried on the uplink time-frequency resource can include but not be limited to at least one of: sounding reference signal (SRS), physical random access channel (PRACH), physical uplink control channel (PUCCH), physical uplink shared channel (PUSCH).

In an example, if the overlapping is that a first slot in the SBFD time-frequency resource overlaps with a second slot in the uplink time-frequency resource, and PRBs in the first slot overlap with PRBs in the second slot, if a channel type carried on the uplink time-frequency resource is PRACH and the FD capability is a non-FD mode, it can be determined that the SBFD time-frequency resource is an unavailable time-frequency resource.

In an example, if the overlapping is that the first slot in the SBFD time-frequency resource overlaps with the second slot in the uplink time-frequency resource, and the PRBs in the first slot overlap with the PRBs in the second slot, if the channel type carried on the uplink time-frequency resource is PRACH and the FD capability is a FD mode, it can be determined that the SBFD time-frequency resource is an unavailable time-frequency resource.

In an example, if the overlapping is that a first slot in the SBFD time-frequency resource overlaps with a second slot in the uplink time-frequency resource, and PRBs in the first slot do not overlap with PRBs in the second slot, if the FD capability is a non-FD mode, and a channel type carried on the uplink time-frequency resource is PRACH, it can be determined that the SBFD time-frequency resource is an unavailable time-frequency resource.

In an example, if the overlapping is that a first slot in the SBFD time-frequency resource overlaps with a second slot in the uplink time-frequency resource, and PRBs in the first slot do not overlap with PRBs in the second slot, if the FD capability is the FD mode, and the channel type carried on the uplink time-frequency resource is PRACH, all PRBs in the first slot of the SBFD time-frequency resource can be selected as the available time-frequency resource.

In an example, if the overlapping is that a first slot in the SBFD time-frequency resource overlaps with a second slot in the uplink time-frequency resource, and PRBs in the first slot do not overlap with PRBs in the second slot, if the FD capability is a FD mode, and a channel type carried on the uplink time-frequency resource is PRACH, it can be determined that the SBFD time-frequency resource is an unavailable time-frequency resource.

In an example, if the overlapping is that a first slot in the SBFD time-frequency resource overlaps with a second slot in the uplink time-frequency resource, and PRBs in the first slot overlap with PRBs in the second slot, if a signal type carried on the uplink time-frequency resource is SRS, and the FD capability is a non-FD mode, it can be determined that the SBFD time-frequency resource is an unavailable time-frequency resource.

In an example, if the overlapping is that a first slot in the SBFD time-frequency resource overlaps with a second slot in the uplink time-frequency resource, and PRBs in the first slot overlap with PRBs in the second slot, if the signal type carried on the uplink time-frequency resource is SRS, and the FD capability is a FD mode, one or more first target PRBs in the first slot of the SBFD time-frequency resource can be selected as the available time-frequency resource. The first target PRBs can be PRBs in symbols which are not occupied by the uplink time-frequency resource.

In an example, if the overlapping is that a first slot in the SBFD time-frequency resource overlaps with a second slot in the uplink time-frequency resource, and PRBs in the first slot overlap with PRBs in the second slot, if a signal type carried on the uplink time-frequency resource is SRS, and the FD capability is a FD mode, for each repetition of transmitted downlink data corresponding to the PDSCH, one or more second target PRBs in the first slot of the SBFD time-frequency resource can be selected as the available time-frequency resource, and the repetition of transmitted downlink data can be sent through the available time-frequency resource. The second target PRBs can be PRBs in symbols which are not occupied by the uplink time-frequency resource.

In an example, if the overlapping is that a first slot in the SBFD time-frequency resource overlaps with a second slot in the uplink time-frequency resource, and PRBs in the first slot overlap with PRBs in the second slot, if a signal type carried on the uplink time-frequency resource is SRS, and the FD capability is a FD mode, for each repetition of transmitted downlink data corresponding to the PDSCH, one or more third target PRBs in the first slot of the SBFD time-frequency resource can be selected as the available time-frequency resource, and the repetition of transmitted downlink data can be sent through the available time-frequency resource. The third target PRBs can be PRBs which are not occupied by the uplink time-frequency resource.

In an example, if the overlapping is that a first slot in the SBFD time-frequency resource overlaps with a second slot in the uplink time-frequency resource, and PRBs in the first slot overlap with PRBs in the second slot, if the signal type carried on the uplink time-frequency resource is SRS, and the FD capability is a FD mode, one or more fourth target PRBs can be selected from the first slot of the SBFD time-frequency resource. The fourth target PRBs can include a first resource element (RE) resource which is not occupied by the uplink time-frequency resource and a second RE resource which is occupied by the uplink time-frequency resource. The first RE resource of the fourth target PRBs can be selected as the available time-frequency resource.

In an example, if the overlapping is that a first slot in the SBFD time-frequency resource overlaps with a second slot in the uplink time-frequency resource, and PRBs in the first slot do not overlap with PRBs in the second slot, if the FD capability is a non-FD mode, and a signal type carried on the uplink time-frequency resource is SRS, it can be determined that the SBFD time-frequency resource is an unavailable time-frequency resource.

In an example, if the overlapping is that a first slot in the SBFD time-frequency resource overlaps with a second slot in the uplink time-frequency resource, and PRBs in the first slot do not overlap with PRBs in the second slot, if the FD capability is the FD mode, and the signal type carried on the uplink time-frequency resource is SRS, all PRBs in the first slot of the SBFD time-frequency resource can be selected as the available time-frequency resource.

In an example, if the overlapping is that a first slot in the SBFD time-frequency resource overlaps with a second slot in the uplink time-frequency resource, and PRBs in the first slot overlap with PRBs in the second slot, if a channel type carried on the uplink time-frequency resource is PUCCH, and the FD capability is a non-FD mode, it can be determined that the SBFD time-frequency resource is an unavailable time-frequency resource.

In an example, if the overlapping is that a first slot in the SBFD time-frequency resource overlaps with a second slot in the uplink time-frequency resource, and PRBs in the first slot overlap with PRBs in the second slot, if the signal type carried on the uplink time-frequency resource is PUCCH, and the FD capability is a FD mode, one or more first target PRBs in the first slot of the SBFD time-frequency resource can be selected as the available time-frequency resource. The first target PRBs can be PRBs in symbols which are not occupied by the uplink time-frequency resource.

In an example, if the overlapping is that a first slot in the SBFD time-frequency resource overlaps with a second slot in the uplink time-frequency resource, and PRBs in the first slot overlap with PRBs in the second slot, if a channel type carried on the uplink time-frequency resource is PUCCH, and the FD capability is a FD mode, for each repetition of transmitted downlink data corresponding to the PDSCH, one or more second target PRBs in the first slot of the SBFD time-frequency resource can be selected as the available time-frequency resource, and the repetition of transmitted downlink data can be sent through the available time-frequency resource. The second target PRBs can be PRBs in symbols which are not occupied by the uplink time-frequency resource.

In an example, if the overlapping is that a first slot in the SBFD time-frequency resource overlaps with a second slot in the uplink time-frequency resource, and PRBs in the first slot overlap with PRBs in the second slot, if a channel type carried on the uplink time-frequency resource is PUCCH, and the FD capability is a FD mode, for each repetition of transmitted downlink data corresponding to the PDSCH, one or more third target PRBs in the first slot of the SBFD time-frequency resource can be selected as the available time-frequency resource, and the repetition of transmitted downlink data can be sent through the available time-frequency resource. The third target PRBs can be PRBs which are not occupied by the uplink time-frequency resource.

In an example, if the overlapping is that a first slot in the SBFD time-frequency resource overlaps with a second slot in the uplink time-frequency resource, and PRBs in the first slot overlap with PRBs in the second slot, if the channel type carried on the uplink time-frequency resource is PUCCH, and the FD capability is a FD mode, one or more fourth target PRBs can be selected from the first slot of the SBFD time-frequency resource. The fourth target PRBs are PRBs which are not occupied by the uplink time-frequency resource. The fourth target PRBs can be selected as the available time-frequency resource.

In an example, if the overlapping is that a first slot in the SBFD time-frequency resource overlaps with a second slot in the uplink time-frequency resource, and PRBs in the first slot do not overlap with PRBs in the second slot, if the FD capability is a non-FD mode, and a channel type carried on the uplink time-frequency resource is PUCCH, it can be determined that the SBFD time-frequency resource is an unavailable time-frequency resource.

In an example, if the overlapping is that a first slot in the SBFD time-frequency resource overlaps with a second slot in the uplink time-frequency resource, and PRBs in the first slot do not overlap with PRBs in the second slot, if the FD capability is the FD mode, and the channel type carried on the uplink time-frequency resource is PUCCH, all PRBs in the first slot of the SBFD time-frequency resource can be selected as the available time-frequency resource.

In an example, if the overlapping is that a first slot in the SBFD time-frequency resource overlaps with a second slot in the uplink time-frequency resource, and PRBs in the first slot overlap with PRBs in the second slot or the PRBs in the first slot do not overlap with the PRBs in the second slot, if a channel type carried on the uplink time-frequency resource is PUSCH, and the FD capability is a non-FD mode, it can be determined data corresponding to the PUSCH carried on the uplink time-frequency resource. If the data is data for random access, it can be determined that the SBFD time-frequency resource is an unavailable time-frequency resource.

If the data is data not for random access, it can be determined a first scheduling type corresponding to the PUSCH carried on the uplink time-frequency resource; and it can be determined a second scheduling type corresponding to the PDSCH carried on the SBFD time-frequency resource. If the first scheduling type is dynamic scheduling and the second scheduling type is semi-static scheduling, it can be determined that the SBFD time-frequency resource is an unavailable time-frequency resource. If the first scheduling type is semi-static scheduling and the second scheduling type is dynamic scheduling, all PRBs in the SBFD time-frequency resource can be selected as the available time-frequency resource.

In an example, if both the first scheduling type and the second scheduling type are dynamic scheduling, or both the first scheduling type and the second scheduling type are semi-static scheduling, it can be determined a first priority corresponding to the PUSCH carried on the uplink time-frequency resource; and it can be determined a second priority corresponding to the PDSCH carried on the SBFD time-frequency resource. If the first priority is greater than the second priority, it can be determined that the SBFD time-frequency resource is an unavailable time-frequency resource. If the first priority is lower than the second priority, all PRBs in the SBFD time-frequency resource can be selected as the available time-frequency resource.

In an example, if the first priority is equal to the second priority, if the PUSCH carried on the uplink time-frequency resource corresponds to initially-transmitted data, and the PDSCH carried on the SBFD time-frequency resource corresponds to retransmission data, it can be determined that the SBFD time-frequency resource is an unavailable time-frequency resource. If the PUSCH carried on the uplink time-frequency resource corresponds to retransmission data, and the PDSCH carried on the SBFD time-frequency resource corresponds to initially-transmitted data, all PRBs in the SBFD time-frequency resource can be selected as the available time-frequency resource. If the PUSCH carried on the uplink time-frequency resource corresponds to initially-transmitted data, and the PDSCH carried on the SBFD time-frequency resource corresponds to initially-transmitted data, all PRBs in the SBFD time-frequency resource can be selected as the available time-frequency resource. If the PUSCH carried on the uplink time-frequency resource corresponds to retransmission data, and the PDSCH carried on the SBFD time-frequency resource corresponds to retransmission data, all PRBs in the SBFD time-frequency resource can be selected as the available time-frequency resource.

In an example, if the overlapping is that a first slot in the SBFD time-frequency resource overlaps with a second slot in the uplink time-frequency resource, and PRBs in the first slot overlap with PRBs in the second slot, if the channel type carried on the uplink time-frequency resource is PUSCH, and the FD capability is a FD mode, all PRBs in the first slot of the SBFD time-frequency resource can be selected as the available time-frequency resource.

In an example, if the overlapping is that a first slot in the SBFD time-frequency resource overlaps with a second slot in the uplink time-frequency resource, and PRBs in the first slot do not overlap with PRBs in the second slot, if the FD capability is the FD mode, and the channel type carried on the uplink time-frequency resource is PUSCH, all PRBs in the first slot of the SBFD time-frequency resource can be selected as the available time-frequency resource.

It can be seen from the above technical solution that downlink data corresponding to the PDSCH can be transmitted on the SBFD time-frequency resource, thereby more effectively utilizing the SBFD time-frequency resource, improving resource utilization, improving network coverage and network capacity, and reducing transmission delay, such as reducing downlink transmission delay.

The above technical solution of the present disclosure will be explained below in combination with examples.

In a TDD system, a frame structure can be divided into UL slots, DL slots, and S slots according to slots. Symbols in the S slot can be configured as UL, DL and F. The F symbol can be used for UL, DL or GP. The downlink data corresponding to the PDSCH can be transmitted in the DL slot, and it can also be transmitted in the DL symbol or the F symbol in the S slot. However, the downlink data corresponding to the PDSCH cannot be transmitted in the UL slot, nor can it be transmitted in the UL symbol in the S slot.

In the TDD system, a SBFD time-frequency resource can be configured in a time-frequency resource (such as a UL slot, a DL slot, and an S slot). Data in different directions from other time-frequency resources can be transmitted on the SBFD time-frequency resource. For example, a SBFD time-frequency resource is configured in a UL slot, and the downlink data corresponding to the PDSCH is transmitted through the SBFD time-frequency resource, so that the downlink data corresponding to the PDSCH is transmitted in the UL slot. For another example, a SBFD time-frequency resource is configured in a UL symbol in an S slot, and the downlink data corresponding to the PDSCH is transmitted through the SBFD time-frequency resource, so that the downlink data corresponding to the PDSCH is transmitted in the UL symbol in the S slot.

In an example, the SBFD symbol is defined as a symbol in which a base station and a UE can be configured with a SBFD sub-band. On the SBFD sub-band (referred to as the SBFD time-frequency resource) of the SBFD symbol, the base station and the UE can full conduct duplex communication. That is, on the SBFD time-frequency resource, uplink transmission, downlink transmission, or simultaneous uplink and downlink transmission can be performed. The SBFD time-frequency resource can be clearly indicated as uplink, downlink, or flexible. When the SBFD time-frequency resource is indicated as flexible, uplink transmission or downlink transmission can be flexibly scheduled on the SBFD time-frequency resource.

The SBFD time-frequency resource can be configured in the DL symbol, the F symbol, and the UL symbol. The slot configured with the SBFD time-frequency resource is also referred to as a SBFD slot. For example, if a SBFD time-frequency resource is configured in the DL symbol of the DL slot, the DL slot is also referred to as the SBFD slot. If a SBFD time-frequency resource is configured in the UL symbol in the UL slot, the UL slot is also referred to as the SBFD slot. If a SBFD time-frequency resource is configured in the DL symbol, the UL symbol or the F symbol of the S slot, the S slot is also referred to as the SBFD slot.

For a UE without a SBFD capability, all SBFD configurations will be ignored. For a UE with the SBFD capability, uplink transmission, downlink transmission, or simultaneous uplink and downlink transmission can be performed on the SBFD time-frequency resource. The following uses the UE with the SBFD capability as an example.

For the UE with the SBFD capability, one is a half duplex UE that supports the SBFD capability. That is, the UE can transmit or receive on the SBFD time-frequency resource, but can only transmit or receive at the same time, which is called a half duplex UE. The other is a full duplex UE that supports the SBFD capability. That is, the UE can transmit and receive on the SBFD time-frequency resource. In other words, at the same time, the UE can simultaneously transmit and receive on the SBFD time-frequency resource, which is called a full duplex UE.

In an example, the SBFD time-frequency resource can be a semi-statically configured SBFD time-frequency resource. For example, the SBFD time-frequency resource is semi-statically configured through radio resource control (RRC) signaling. The SBFD time-frequency resource can also be a dynamically configured SBFD time-frequency resource. For example, the SBFD time-frequency resource is dynamically configured through downlink control information (DCI) signaling.

In an example, the downlink data corresponding to the PDSCH can be transmitted on the SBFD time-frequency resource. For example, the SBFD time-frequency resource can be configured in the UL slot, and the downlink data corresponding to the PDSCH can be transmitted through the SBFD time-frequency resource, so that the PDSCH can be scheduled in the SBFD time-frequency resource of the UL slot. By defining a scheduling strategy of the base station and UE for the PDSCH in the SBFD time-frequency resource, downlink transmission based on the SBFD time-frequency resource can be achieved in the TDD system, and the overall performance of the TDD system can be improved.

In order to transmit the downlink data corresponding to the PDSCH on the SBFD time-frequency resource, the scheduling strategy of the PDSCH in the SBFD time-frequency resource can be determined based on an overlapping between the SBFD time-frequency resource (i.e., the time-frequency resource used by the PDSCH) and the uplink time-frequency resource (i.e., the time-frequency resource occupied by uplink data) and the FD capability of the UE (such as the FD mode or the non-FD mode). Such that the base station and the UE can have a clear transmission mechanism, and full duplex communication based on the SBFD time-frequency resource between the base station and the UE can be implemented.

In an example, the downlink data carried in the PDSCH can include but not limited to application data and downlink common control information. The downlink common control information can include but not limited to system information block (SIB), paging information, message B (MSG-B) in a 2-step random access procedure, message 2 (MSG2) in a 4-step random access procedure, and message 4 (MSG4) in a 4-step random access procedure. Based on the above data carried in the PDSCH, the PDSCH can transmit initially-transmitted data, retransmission data based on hybrid automatic repeat request (HARQ) feedback, or repetition of the transmitted data with semi-static configuration, which is not limited.

FIG. 2 is a schematic diagram of scheduling PDSCH in a SBFD time-frequency resource. If the SBFD time-frequency resource is in the DL symbol or the F symbol, the downlink data corresponding to the PDSCH can be transmitted across the SBFD time-frequency resource. That is, a part of the downlink data can be transmitted within the SBFD time-frequency resource, and the other part of the downlink data can be transmitted outside the SBFD time-frequency resource. In FIG. 2, for slots 0 and 1, the downlink data corresponding to the PDSCH can be transmitted within the SBFD time-frequency resource, and can also be transmitted outside the SBFD time-frequency resource.

If the SBFD time-frequency resource is in the UL symbol, the downlink data corresponding to the PDSCH can only be transmitted within the SBFD time-frequency resource, and UL resources outside the SBFD time-frequency resource cannot be used. For a dynamic scheduling PDSCH, the PDSCH can be scheduled in the SBFD time-frequency resource through DCI. For a semi-persistent scheduling (SPS) PDSCH, if the SPS PDSCH is beyond the scope of the SBFD time-frequency resource, the PDSCH is only sent within the SBFD time-frequency resource. In FIG. 2, for slots 2 and 3, the downlink data corresponding to the PDSCH can only be transmitted within the SBFD time-frequency resource.

In an example, since the SBFD time-frequency resource will overlap with an uplink time-frequency resource, the transmission strategy of the PDSCH can be comprehensively considered based on information such as the overlapping between the SBFD time-frequency resource and the uplink time-frequency resource, the FD capability of the UE, a signal type or a channel type carried on the uplink time-frequency resource.

For example, an available time-frequency resource can be selected from the SBFD time-frequency resource, and the downlink data corresponding to the PDSCH can be transmitted on the available time-frequency resource. Or, the SBFD time-frequency resource can be determined as an unavailable time-frequency resource, and the downlink data corresponding to the PDSCH cannot be transmitted on the SBFD time-frequency resource.

Case 1: a conflict between a SBFD time-frequency resource and a PRACH uplink time-frequency resource, that is, the PDSCH carried by the SBFD time-frequency resource conflicts with the PRACH carried by an uplink time-frequency resource.

Regarding the conflict between the PRACH and a dynamically configured SBFD time-frequency resource.

Since the base station clearly knows the location of the PRACH uplink time-frequency resource, in order to ensure that a UE can normally use the PRACH to send access preamble and complete initial access of the UE, the base station needs to avoid dynamically configuring the SBFD time-frequency resource in the uplink time-frequency resource occupied by the PRACH. From the perspective of the UE, the UE also does not expect to be dynamically configured with the SBFD time-frequency resource in the uplink time-frequency resource that overlaps with the PRACH. The uplink data corresponding to PRACH uplink time-frequency resource (symbol) can include a RACH occasion (RO) and a GP symbol that may exist before the RO.

Regarding the conflict between the PRACH and a semi-statically configured SBFD time-frequency resource.

For a half duplex UE, when the UE does not access the network, the UE needs to be ready to access the network at any time. Therefore, the PRACH uplink time-frequency resource cannot be occupied, and the downlink data corresponding to the PDSCH, such as SIB1, cannot be sent in the SBFD time-frequency resource that conflicts with the PRACH uplink time-frequency resource. For a dynamic scheduling PDSCH, it is possible to avoid sending the downlink data corresponding to the PDSCH on the conflicting SBFD time-frequency resource through dynamic scheduling. For a semi-persistent scheduling (SPS) PDSCH, base station does not send the downlink data corresponding to the PDSCH on the SBFD time-frequency resource that conflicts with the PRACH uplink time-frequency resource, and the UE will not receive the downlink data on the SBFD time-frequency resource that conflicts with the PRACH uplink time-frequency resource.

For the half duplex UE, during the process of the UE accessing to the network, the PRACH uplink time-frequency resource (i.e., RO resource) is used in MSG 1 (4-step RACH) or MSGA (2-step RACH), and the PDSCH is used in MSG 2, MSG 4 (4-step RACH), or MSG B (2-step RACH). That is, the PRACH and the PDSCH are not used simultaneously. However, considering that the PRACH uplink time-frequency resource is shared by multiple users, when the downlink data corresponding to the PDSCH is sent, on the SBFD time-frequency resource that conflicts with the PRACH uplink time-frequency resource, to a UE, other UEs will be affected to receive PRACH. Therefore, the downlink data corresponding to the PDSCH is not sent on the SBFD time-frequency resource that conflicts with the PRACH uplink time-frequency resource.

For the half duplex UE, after the UE accesses to the network, the PRACH uplink time-frequency resource is no longer needed. However, other UEs that do not access to the network may initiate random access on the PRACH uplink time-frequency resource. When the downlink data corresponding to the PDSCH is sent, on the SBFD time-frequency resource that conflicts with the PRACH uplink time-frequency resource, to a UE, other UEs will be affected to receive PRACH. Therefore, the downlink data corresponding to the PDSCH is not sent on the SBFD time-frequency resource that conflicts with the PRACH uplink time-frequency resource.

To sum up, for the half duplex UE, considering the importance of PRACH, when the SBFD time-frequency resource overlaps with the PRACH uplink time-frequency resource, in any SBFD symbol that overlaps with the PRACH symbol, the base station will not send the downlink data corresponding to the PDSCH. That is, the base station will not send the downlink data corresponding to dynamic scheduling PDSCH, nor will it send the downlink data corresponding to semi-static scheduling PDSCH. Correspondingly, the UE will do not receive the downlink data corresponding to the PDSCH in the SBFD time-frequency resource.

For the half duplex UE, that is, the UE does not support the FD mode, when the channel type carried on the uplink time-frequency resource is PRACH, if a first slot in the SBFD time-frequency resource overlaps with a second slot in the PRACH uplink time-frequency resource, regardless of whether the PRBs in the first slot overlap with the PRBs in the second slot or not, it is determined that the SBFD time-frequency resource is an unavailable time-frequency resource. That is, the downlink data corresponding to the PDSCH is not sent in the SBFD time-frequency resource. If the first slot in the SBFD time-frequency resource does not overlap with the second slot in the PRACH uplink time-frequency resource, it is determined that the SBFD time-frequency resource is the available time-frequency resource. That is, the downlink data corresponding to the PDSCH is sent in the SBFD time-frequency resource.

The slot in the SBFD time-frequency resource is called the first slot, and the slot in the PRACH uplink time-frequency resource is called the second slot. If the first slot and the second slot are the same, the first slot in the SBFD time-frequency resource overlaps with the second slot in the PRACH uplink time-frequency resource. If the first slot and the second slot are different, the first slot in the SBFD time-frequency resource does not overlap with the second slot in the PRACH uplink time-frequency resource.

Regarding the conflict between PRACH and a semi-statically configured SBFD time-frequency resource.

For a full duplex UE, if the PRACH uplink time-frequency resource overlaps with the SBFD time-frequency resource, for example, PRBs in the PRACH uplink time-frequency resource and PRBs in the SBFD time-frequency resource overlap (partially or completely), as shown in FIG. 3, which is a schematic diagram of partial overlap. F represents a flexible slot, which can be used for uplink or downlink. DL represents a downlink slot. UL represents an uplink slot. In FIG. 3, the PRACH uplink time-frequency resource in slot 4 partially overlaps with the SBFD time-frequency resource. The shaded part represents the SBFD time-frequency resource that overlaps with the PRACH uplink time-frequency resource. That is, the shaded part represents PRBs of the overlapping part.

Before performing random access, the UE needs to receive SIB 1 through the PDSCH, obtain PRACH configuration information, and perform random access based on the PRACH configuration information. When the base station sends SIB 1 on the SBFD time-frequency resource that overlaps with the PRACH uplink time-frequency resource, SIB 1 will affect the detection performance of PRACH preamble, and the UE will also affect its reception of SIB 1 when sending PRACH preamble.

Since both the PRACH preamble and SIB 1 are important information, it is necessary to avoid scheduling SIB 1 on the PRACH uplink time-frequency resource, so as to avoid interference on SIB 1 and the PRACH. When the base station transmits other downlink data through THE PDSCH, it is also necessary to avoid affecting the transmission of the PRACH preamble.

To sum up, when the PRBs in the PRACH uplink time-frequency resource overlap with the PRBs in the SBFD time-frequency resource, the UE does not expect to schedule any PDSCH on the overlapping SBFD time-frequency resource. For a semi-persistent scheduling (SPS) PDSCH, the base station does not send the PDSCH on the overlapping SBFD time-frequency resource. Correspondingly, the UE also does not expect to receive PDSCH on the overlapping SBFD time-frequency resource.

To sum up, it can be seen that for the full duplex UE, that is, the UE supports the FD mode, when the channel type carried on the uplink time-frequency resource is PRACH, if the first slot in the SBFD time-frequency resource overlaps with the second slot in the PRACH uplink time-frequency resource, and the PRBs in the first slot overlap with the PRBs in the second slot, it can be determined that the SBFD time-frequency resource is an unavailable time-frequency resource. That is, the downlink data corresponding to the PDSCH is not sent on the SBFD time-frequency resource. If the first slot in the SBFD time-frequency resource does not overlap with the second slot in the PRACH uplink time-frequency resource, it can be determined that the SBFD time-frequency resource is the available time-frequency resource.

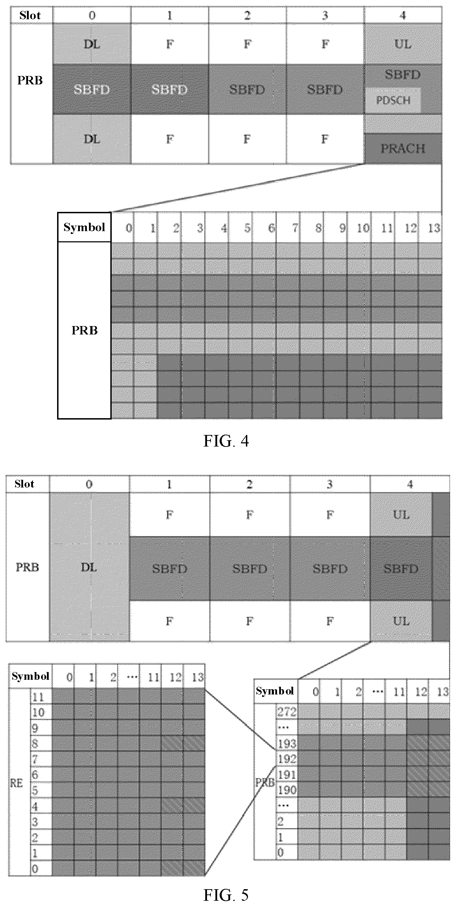

For the full duplex UE, if the PRACH uplink time-frequency resource does not overlap with the SBFD time-frequency resource, for example, the PRBs in the PRACH uplink time-frequency resource and the PRBs in the SBFD time-frequency resource do not overlap, as shown in FIG. 4, which is a schematic diagram of non-overlapping between time-frequency resources in the same symbol. Different from overlapping, when PRBs do not overlap, there is only inter sub-band interference. Compared to intra sub-band interference, inter sub-band interference is smaller.

Based on this, the following schemes can be adopted for processing. Scheme 1: the downlink data corresponding to the PDSCH is not sent in any time-frequency resource with the SBFD symbol that overlaps with the PRACH symbol. Scheme 2: the downlink data corresponding to the PDSCH is sent in all SBFD time-frequency resources. For the dynamic scheduling PDSCH and repetition of PDSCH, the base station can determine whether to schedule PDSCH in the SBFD time-frequency resource, and send scheduling information to the UE through DCI. The UE receives the PDSCH according to the scheduling information. For the semi-persistent scheduling (SPS), if there is no overlap between the SBFD time-frequency resource and the PRACH uplink time-frequency resource, the base station sends the downlink data corresponding to the PDSCH in the SBFD time-frequency resource, and the UE receives the downlink data corresponding to the PDSCH in the SBFD time-frequency resource.

To sum up, it can be seen that for the full duplex UE, that is, the UE supports the FD mode, when the channel type carried on the uplink time-frequency resource is PRACH, if the first slot in the SBFD time-frequency resource does not overlap with the second slot in the PRACH uplink time-frequency resource, and the PRBs in the first slot overlap with the PRBs in the second slot, all PRBs in the first slot of the SBFD time-frequency resource are selected as the available time-frequency resource, and the downlink data corresponding to the PDSCH is sent in the SBFD time-frequency resource. That is, the downlink data corresponding to the PDSCH is sent in all SBFD time-frequency resources (Scheme 2). Or, it can be determined that the SBFD time-frequency resource is an unavailable time-frequency resource, that is, the downlink data corresponding to the PDSCH is not sent in the SBFD time-frequency resource (Scheme 1).

Case 2: a conflict between a SBFD time-frequency resource and a SRS uplink time-frequency resource, that is, the PDSCH carried by the SBFD time-frequency resource conflicts with the SRS carried by an uplink time-frequency resource.

In an example, the SRS is used for uplink beam management, precoding, antenna switching, and other functions. The SRS is semi-statically configured through RRC signaling. The SRS can be configured as periodic, semi-persistent, and non-periodic. For the periodic SRS, it is activated when the configuration is completed. For the semi-persistent SRS, it needs to be activated through media access control-control element (MAC CE). For non-periodic SRS, it needs to be activated through DCI.

When the activated SRS and the SBFD time-frequency resource overlap, the transmission strategy of the PDSCH in the SBFD time-frequency resource can be determined based on the FD capability of the UE.

For a half duplex UE, it is necessary to define how the UE handles PDSCH in a SBFD time-frequency resource that overlaps with the SRS. If the PDSCH is dynamic scheduling, the base station does not schedule the PDSCH and repetition of PDSCH in the SRS uplink time-frequency resource (for example, symbols occupied by the SRS and at least one symbol before the SRS symbol (for GP)). The UE does not expect to receive the PDSCH and repetition of PDSCH in the SRS uplink time-frequency resource. In addition, if the PDSCH and repetition of PDSCH are SPS, and the time-frequency resource of the PDSCH is sent to the UE through DCI during the SPS activation process, when allocating the time-frequency resource for the PDSCH and repetition of PDSCH, the base station does not allocate the time-frequency resource for the PDSCH and repetition of PDSCH in the SRS uplink time-frequency resource. The UE does not receive the PDSCH and PDSCH repetition data in the SRS uplink time-frequency resource.

To sum up, it can be seen that for the half duplex UE, when the signal type carried on the uplink time-frequency resource is SRS, if the first slot in the SBFD time-frequency resource overlaps with the second slot in the SRS uplink time-frequency resource, regardless of whether the PRBs in the first slot overlap with the PRBs in the second slot or not, it is determined that the SBFD time-frequency resource is an unavailable time-frequency resource. That is, the downlink data corresponding to the PDSCH is not sent in SBFD time-frequency resource. If the first slot in the SBFD time-frequency resource does not overlap with the second slot in the SRS uplink time-frequency resource, it is determined that the SBFD time-frequency resource is the available time-frequency resource. That is, the downlink data corresponding to the PDSCH is sent in the SBFD time-frequency resource.

For a full duplex UE, if the SRS uplink time-frequency resource does not overlap with the SBFD time-frequency resource, for example, the PRBs in the SRS uplink time-frequency resource do not overlap with the PRBs in the SBFD time-frequency resource, for example, different PRB resources are occupied in a same symbol, or same PRB resources are occupied in different symbols, the base station can send the downlink data corresponding to the PDSCH in the SBFD time-frequency resource. The UE can receive the downlink data corresponding to the PDSCH in the corresponding SBFD time-frequency resource.

To sum up, it can be seen that for the full duplex UE, when the signal type carried on the uplink time-frequency resource is SRS, if the first slot in the SBFD time-frequency resource overlaps with the second slot in the SRS uplink time-frequency resource, and the PRBs in the first slot do not overlap with the PRBs in the second slot, all PRBs in the first slot of the SBFD time-frequency resource are selected as the available time-frequency resource, and the downlink data corresponding to the PDSCH is sent in the SBFD time-frequency resource. That is, the downlink data corresponding to the PDSCH is sent in all SBFD time-frequency resources. If the first slot in the SBFD time-frequency resource does not overlap with the second slot in the SRS uplink time-frequency resource, it is determined that the SBFD time-frequency resource is the available time-frequency resource, and the downlink data corresponding to the PDSCH is sent in the SBFD time-frequency resource.

For the full duplex UE, if the SRS uplink time-frequency resource overlaps with the SBFD time-frequency resource, for example, PRBs in the SRS uplink time-frequency resource overlap with PRBs in the SBFD time-frequency resource, as shown in FIG. 5, which is a schematic diagram of the PRBs in the SBFD time-frequency resource overlapping with the PRBs in the SRS uplink time-frequency resource. The SBFD time-frequency resource occupies PRBs such as #190 to #193, the SRS uplink time-frequency resource occupies 272 PRBs in symbols #12 to #13, and the SRS uplink time-frequency resource occupies REs #0, #5, #9 in each PRB.

For a dynamic scheduling PDSCH, the time-frequency resource occupied by the PDSCH is sent by the base station to the UE through DCI. When the PDSCH is transmitted on the SBFD time-frequency resource that overlaps with the SRS, the following schemes can be adopted. Scheme 1: the base station does not schedule the PDSCH in the SBFD time-frequency resource that overlaps with the SRS, and the UE does not receive the downlink data corresponding to the PDSCH in the SBFD time-frequency resource that overlaps with the SRS.

In Scheme 1, the base station can determine the SBFD time-frequency resource that overlaps with the SRS, schedule the PDSCH on the other non-overlapping time-frequency resources, and send the time-frequency resource used by the PDSCH to the UE through DCI. The UE receives the downlink data corresponding to the PDSCH based on scheduling information.

To sum up, it can be seen that for the full duplex UE, when the signal type carried on the uplink time-frequency resource is SRS, if the first slot in the SBFD time-frequency resource overlaps with the second slot in the SRS uplink time-frequency resource, and the PRBs in the first slot overlap with the PRBs in the second slot, one or more target PRBs in the first slot of the SBFD time-frequency resource are selected as the available time-frequency resource, and the downlink data corresponding to the PDSCH is sent on the available time-frequency resource. That is, the downlink data corresponding to the PDSCH is sent on part of the SBFD time-frequency resource, rather than sending the downlink data corresponding to the PDSCH in all time-frequency resources of the SBFD time-frequency resource. The target PRBs can be PRBs in symbols which are not occupied by the SRS uplink time-frequency resource. That is, the symbols occupied by the SRS uplink time-frequency resource are excluded from the SBFD time-frequency resource, and the downlink data corresponding to the PDSCH is sent in the PRBs of the remaining symbols, rather than sending the downlink data corresponding to the PDSCH in the symbols occupied by the SRS uplink time-frequency resource.

In an example, for the repetition of PDSCH, it is possible that the time-frequency resource corresponding to some repetitions of PDSCH does not overlap with the SRS uplink time-frequency resource, but the time-frequency resource corresponding to other repetitions of PDSCH overlaps with the SRS uplink time-frequency resource. In this case, the following manners can be adopted.

Manner A: based on the SBFD time-frequency resource that overlaps with the SRS uplink time-frequency resource, the base station ensures that all PDSCHs (for example, multiple repetitions of PDSCH) transmitted in the SBFD time-frequency resource do not conflict with the SRS uplink time-frequency resource. That is, all repetitions of PDSCH use PRBs in symbols which are not occupied by the SRS uplink time-frequency resource. The UE receives repetitions of PDSCH based on the scheduling information of the base station.

In Manner A, for initial transmission of PDSCH and each repetition of PDSCH (i.e., each repetition of transmitted downlink data corresponding to the PDSCH), one or more target PRBs can be selected from the first slot of the SBFD time-frequency resource. The target PRBs can be the PRBs in the symbols which are not occupied by the SRS uplink time-frequency resource. That is, the PRBs in the symbols which are not occupied by the SRS uplink time-frequency resource can be used as the target PRBs to participate in repetition of PDSCH. Then, the target PRBs can be selected as the available time-frequency resource, and repetition corresponding to the PDSCH can be transmitted on the available time-frequency resource, or the downlink data corresponding to the initial transmission of PDSCH can be transmitted on the available time-frequency resource.

Manner B: the base station configures the time-frequency resource used for PDSCH transmission based on the actual data size. For PDSCH on the SBFD time-frequency resource that overlaps with the SRS uplink time-frequency resource, downlink data corresponding to the PDSCH is transmitted on SBFD time-frequency resource that does not overlap with the SRS uplink time-frequency resource. For example, for initial transmission of PDSCH and multiple repetitions of PDSCH, one or more PRBs that are not occupied by the SRS uplink time-frequency resource can be used. The PRBs that are not occupied by the SRS uplink time-frequency resource can be PRBs in symbols which are not occupied by the SRS uplink time-frequency resource or PRBs in symbols which are occupied by the SRS uplink time-frequency resource.

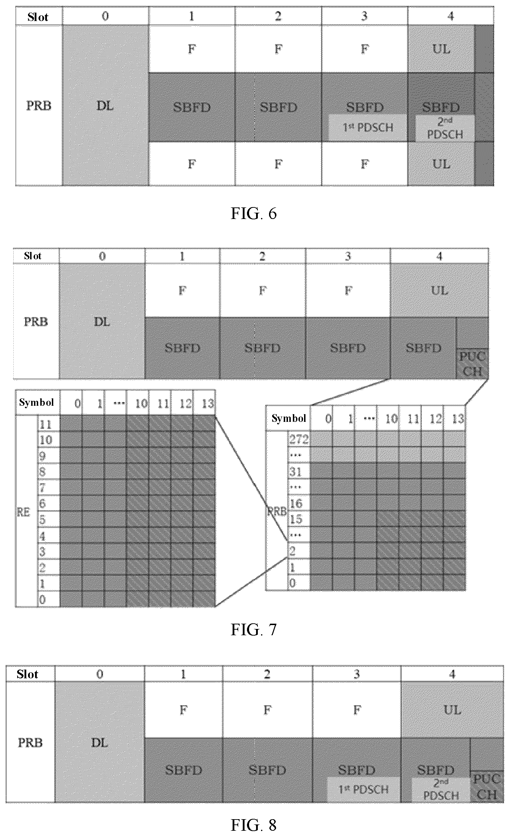

FIG. 6 is a schematic diagram of a repetition of PDSCH overlapping with a SRS uplink time-frequency resource. The initial transmission of PDSCH is in slot 3, and the repetition of PDSCH overlaps with the SRS uplink time-frequency resource in slot 4. In this case, all downlink data corresponding to the PDSCH is normally transmitted in slot 3. However, during the repetition of PDSCH in slot 4, only part of the downlink data can be transmitted in the non-overlapping SBFD time-frequency resource. Similarly, if the time-frequency resource of initial transmission of PDSCH overlaps with the SRS uplink time-frequency resource, downlink data corresponding to the initial transmission of PDSCH is only transmitted in the non-overlapping SBFD time-frequency resource.

In Manner B, for initial transmission of PDSCH and each repetition of PDSCH, the target PRBs can be selected from the first slot of the SBFD time-frequency resource. The target PRBs can be the PRBs that are not occupied by the SRS uplink time-frequency resource. That is, the PRBs that are not occupied by the SRS uplink time-frequency resource can be used as the target PRBs to participate in initial transmission of PDSCH or repetition of PDSCH. Then, the target PRBs can be selected as the available time-frequency resource and the downlink data corresponding to the PDSCH can be transmitted on the available time-frequency resource.

In an example, for PDSCH retransmission based on HARQ feedback, DCI is needed for scheduling. If the SBFD time-frequency resource that does not overlap with the SRS uplink time-frequency resource is enough for PDSCH retransmission, the base station schedules PDSCH retransmission in the SBFD time-frequency resource. The UE receives downlink data corresponding to PDSCH retransmission according to scheduling information. If the SBFD time-frequency resource that does not overlap with the SRS uplink time-frequency resource is not enough to send the downlink data corresponding to PDSCH retransmission, the base station may not schedule PDSCH retransmission in the SBFD time-frequency resource. The UE will not receive the downlink data corresponding to PDSCH retransmission in the SBFD time-frequency resource. Or, the base station schedules PDSCH retransmission in the SBFD time-frequency resource. However, the base station only sends part of PDSCH retransmission data according to the available resource size. The UE also receives PDSCH retransmission data in the non-overlapping SBFD time-frequency resource according to scheduling information.

Scheme 2: downlink data corresponding to the PDSCH is performed rate matching around the SRS in the SBFD time-frequency resource. In Scheme 2, the base station schedules the PDSCH in the SBFD time-frequency resource that overlaps with the SRS uplink time-frequency resource. However, the downlink data corresponding to the PDSCH is sent in all REs that are not occupied by the SRS uplink time-frequency resource. As shown in FIG. 5, in symbols #12 to #13, all REs except REs #0, #5, and #9 can be used to transmit the downlink data corresponding to the PDSCH, and rate matching can be performed in these REs.

To sum up, it can be seen that for the full duplex UE, when the signal type carried on the uplink time-frequency resource is SRS, if the first slot in the SBFD time-frequency resource overlaps with the second slot in the SRS uplink time-frequency resource, and the PRBs in the first slot overlap with the PRBs in the second slot, the target PRBs can be selected from the first slot of the SBFD time-frequency resource. The target PRBs include a first RE resource which is not occupied by the SRS uplink time-frequency resource and a second RE resource which is occupied by the SRS uplink time-frequency resource. The first RE resource of the target PRBs is selected as the available time-frequency resource, and the downlink data corresponding to the PDSCH is sent on the available time-frequency resource. That is, the downlink data corresponding to the PDSCH is sent on part time-frequency resource of the target PRBs of the SBFD time-frequency resource.

The target PRBs can include PRBs are occupied by the SRS uplink time-frequency resource. That is, a part of REs of the target PRBs are occupied by the SRS uplink time-frequency resource. The REs occupied by the SRS uplink time-frequency resource can be excluded from the target PRBs, and the downlink data corresponding to the PDSCH can be sent in the remaining RE resource.

In an example, for the location of the uplink time-frequency resource occupied by the SRS, the base station configures it to the UE through RRC signaling. For semi-persistent SRS, the base station activates the SRS through a MAC CE command. For non-periodic SRS, the base station activates the SRS through a DCI command. Therefore, the base station performs rate matching on the PDSCH based on the effective location of the SRS resource, and the UE also performs rate de-matching on the PDSCH around the SRS according to configuration of the SRS resource.

For example, within a bandwidth part (BWP), a UE can be configured with one or more periodic, semi-persistent, or non-periodic SRS resource sets, each of which can include at most 16 SRS resources. For a periodic SRS, all RE resources of the SRS configured by srs-ResourceSetToAddModList and srs-ResourceToAddModList cannot be used by PDSCH. For a semi-persistent SRS, all RE resources of the SRS configured by srs-ResourceSetToAddModList and srs-ResourceToAddModList and activated by MAC CE cannot be used by PDSCH. For a non-periodic SRS resource, all RE resources of the SRS configured by srs-ResourceSetToAddModList and srs-ResourceToAddModList and activated by DCI cannot be used by PDSCH.

Similarly, for repetition of PDSCH and PDSCH retransmission based on HARQ feedback transmitted in the SBFD time-frequency resource that overlaps with the SRS uplink time-frequency resource, it is necessary to perform rate matching around the SRS in the SBFD time-frequency resource that overlaps with the SRS according to the above scheme, which is not repeated herein.

From the perspective of the UE, the choice of scheme (Scheme 1 or Scheme 2) for single PDSCH transmission and PDSCH transmission based on HARQ can be determined during the dynamic scheduling process. If the UE determines that the SBFD time-frequency resource occupied by the dynamic scheduling PDSCH does not overlap with the SRS uplink time-frequency resource, it can be determined that the choice is Scheme 1. Otherwise, it can be determined that the choice is Scheme 2, and the UE can perform rate matching on the PDSCH around the SRS. For the repetition of PDSCH, the UE cannot determine which scheme to adopt based on parameters of the repetition of PDSCH, so there can be dedicated indication parameters.

The number of repetitions of PDSCH is configured through a RRC parameter pdsch-AggregationFactor or RepetitionSchemeConfig-r16. Therefore, when repetitions of PDSCH are performed in the SBFD time-frequency resource that overlaps with the SRS uplink time-frequency resource, the RRC parameter is also used to indicate which scheme to adopt.

For example, when using the pdsch-AggregationFactor configuration to indicate whether to adopt Scheme 1 or Scheme 2, a new parameter pdsch-AggregationMultiplexingWithSRSInSbfd: pdsch-AggregationMultiplexing WithSRSInSbfd ENUMERATED {noTx, rm} option can be introduced. This parameter can be referred to as an indication parameter for the repetition of PDSCH and SRS multiplexing mode. If pdsch-AggregationFactor is not configured, pdsch-AggregationMultiplexingWithSRSInSbfd is also not configured. If pdsch-AggregationFactor is configured, pdsch-AggregationMultiplexingWithSRSInSbfd is used to indicate whether Scheme 1 or Scheme 2 is adopted. For example, if one of two options (noTx, rm) is selected, noTx means no transmission, and this option corresponds to Scheme 1, that is, Scheme 1 is adopted for processing; rm means rate matching, and this option corresponds to Scheme 2, that is, Scheme 2 is adopted for processing.

For example, when using the RepetitionSchemeConfig-r16 configuration to indicate whether to use Scheme 1 or Scheme 2, a new parameter RepetitionMultiplexingWithSRS: RepetitionMultiplexingWithSRS ENUMERATED {noTx, rm} option can be introduced. This parameter can be referred to as an indication parameter for the repetition of PDSCH and SRS multiplexing mode. If RepetitionSchemeConfig-r16 is not configured, RepetitionMultiplexingWithSRS is also not configured. If Repetition SchemeConfig-r16 is configured, RepetitionMultiplexingWithSRS is used to indicate whether Scheme 1 or Scheme 2 is adopted. For example, if one of two options (noTx, rm) is selected, noTx means no transmission, and this option corresponds to Scheme 1; rm means rate matching, and this option corresponds to Scheme 2.

For the above parameters, if RepetitionSchemeConfig-rlo is configured, then pdsch-AggregationFactor is no longer configured. If RepetitionMultiplexingWithSRS is configured, then pdsch-AggregationMultiplexingWithSRSInSbfd is no longer configured.

In an example, for a semi-persistent scheduling (SPS) PDSCH, the time-frequency resource occupied by the PDSCH will be sent to the UE through DCI when the semi-static configuration is activated. Therefore, the above manners can also be used for SPS PDSCH, repetition of SPS PDSCH and retransmission based on HARQ feedback.

Case 3: a conflict between a SBFD time-frequency resource and a PUCCH uplink time-frequency resource, that is, the PDSCH carried by the SBFD time-frequency resource conflicts with the PUCCH carried by an uplink time-frequency resource.

In an example, the PUCCH is used to transmit scheduling requests (SRs), HARQ feedbacks, and channel state information (CSI) reports. PUCCH is divided into multiple formats, namely PUCCH formats 0/1/2/3/4. PUCCH formats 0/2 are short PUCCHs with a length of 1 or 2 symbols. PUCCH formats 1/3/4 are long PUCCHs with a length ranging from 4 to 14 symbols. When there is a situation where the PUCCH uplink time-frequency resource overlaps with the SBFD time-frequency resource, the transmission strategy of the PDSCH in the SBFD time-frequency resource can be determined based on the FD capability of the UE.

For a half duplex UE, it is necessary to define how the UE handles PDSCH in a SBFD time-frequency resource that overlaps with the PUCCH. If the PDSCH is dynamic scheduling, the base station does not schedule the PDSCH and repetition of PDSCH in the PUCCH uplink time-frequency resource (for example, symbols occupied by the PDSCH and at least one symbol before the PDSCH (for GP)). The UE does not expect to receive the PDSCH and repetition of PDSCH in the PUCCH uplink time-frequency resource. If the PDSCH is semi-persistent scheduling (SPS), the base station does not schedule the PDSCH and repetition of PDSCH in the PUCCH uplink time-frequency resource. The UE does not expect to receive the PDSCH and repetition of PDSCH in the PUCCH uplink time-frequency resource.

To sum up, it can be seen that for the half duplex UE, when the channel type carried on the uplink time-frequency resource is PUCCH, if the first slot in the SBFD time-frequency resource overlaps with the second slot in the PUCCH uplink time-frequency resource, regardless of whether the PRBs in the first slot overlap with the PRBs in the second slot or not, it is determined that the SBFD time-frequency resource is an unavailable time-frequency resource. That is, the downlink data corresponding to the PDSCH is not sent in SBFD time-frequency resource. If the first slot in the SBFD time-frequency resource does not overlap with the second slot in the PUCCH uplink time-frequency resource, it is determined that the SBFD time-frequency resource is the available time-frequency resource. That is, the downlink data corresponding to the PDSCH is sent in the SBFD time-frequency resource.

For a full duplex UE, if the PUCCH uplink time-frequency resource does not overlap with the SBFD time-frequency resource, for example, the PRBs in the PUCCH uplink time-frequency resource do not overlap with the PRBs in the SBFD time-frequency resource, for example, different PRB resources are occupied in a same symbol, or same PRB resources are occupied in different symbols, the base station can send the downlink data corresponding to the PDSCH in the SBFD time-frequency resource. The UE can receive the downlink data corresponding to the PDSCH in the corresponding SBFD time-frequency resource. That is, the UE can receive the downlink data corresponding to the PDSCH while sending the PUCCH.

To sum up, it can be seen that for the full duplex UE, when the channel type carried on the uplink time-frequency resource is PUCCH, if the first slot in the SBFD time-frequency resource overlaps with the second slot in the PUCCH uplink time-frequency resource, and the PRBs in the first slot do not overlap with the PRBs in the second slot, all PRBs in the first slot of the SBFD time-frequency resource are selected as the available time-frequency resource, and the downlink data corresponding to the PDSCH is sent in the SBFD time-frequency resource. That is, the downlink data is sent in all SBFD time-frequency resources. If the first slot in the SBFD time-frequency resource does not overlap with the second slot in the PUCCH uplink time-frequency resource, it is determined that the SBFD time-frequency resource is the available time-frequency resource, and the downlink data corresponding to the PDSCH is sent in the SBFD time-frequency resource.

For the full duplex UE, if the PUCCH uplink time-frequency resource overlaps with the SBFD time-frequency resource, for example, PRBs in the PUCCH uplink time-frequency resource overlap with PRBs in the SBFD time-frequency resource, as shown in FIG. 7, which is a schematic diagram of the PRBs in the SBFD time-frequency resource overlapping with the PRBs in the PUCCH uplink time-frequency resource. The SBFD time-frequency resource occupies PRBs such as #190 to #193, and the PUCCH uplink time-frequency resource (such as PUCCH format 3) occupies 16 PRBs in symbols #10 to #13.

For a dynamic scheduling PDSCH, the time-frequency resource occupied by the PDSCH is sent by the base station to the UE through DCI. When the PDSCH is transmitted on the SBFD time-frequency resource that overlaps with the PUCCH, the following schemes can be adopted. Scheme 1: the base station does not schedule the PDSCH in the SBFD time-frequency resource that overlaps with the PUCCH, and the UE does not receive the downlink data corresponding to the PDSCH in the SBFD time-frequency resource that overlaps with the PUCCH. In Scheme 1, the base station can determine the SBFD time-frequency resource that overlaps with the PUCCH, schedule the PDSCH on the other non-overlapping time-frequency resources, and send the time-frequency resource used by the PDSCH to the UE through DCI. The UE receives the downlink data corresponding to the PDSCH based on scheduling information.

To sum up, it can be seen that for the full duplex UE, when the channel type carried on the uplink time-frequency resource is PUCCH, if the first slot in the SBFD time-frequency resource overlaps with the second slot in the PUCCH uplink time-frequency resource, and the PRBs in the first slot overlap with the PRBs in the second slot, one or more target PRBs in the first slot of the SBFD time-frequency resource are selected as the available time-frequency resource, and the downlink data corresponding to the PDSCH is sent on the available time-frequency resource. That is, the downlink data corresponding to the PDSCH is sent on part of the SBFD time-frequency resource. The target PRBs can be PRBs in symbols which are not occupied by the PUCCH uplink time-frequency resource. That is, the symbols occupied by the PUCCH uplink time-frequency resource are excluded from the SBFD time-frequency resource, and the downlink data corresponding to the PDSCH is sent in the PRBs of the remaining symbols, rather than sending the downlink data corresponding to the PDSCH in the symbols occupied by the PUCCH uplink time-frequency resource.

In an example, for the repetition of PDSCH, it is possible that the time-frequency resource corresponding to some repetitions of PDSCH does not overlap with the PUCCH uplink time-frequency resource, but the time-frequency resource corresponding to other repetitions of PDSCH overlaps with the PUCCH uplink time-frequency resource. In this case, the following manners can be adopted.

Manner A: based on the SBFD time-frequency resource that overlaps with the PUCCH uplink time-frequency resource, the base station ensures that all PDSCHs (for example, multiple repetitions of PDSCH) transmitted in the SBFD time-frequency resource do not conflict with the PUCCH uplink time-frequency resource. That is, all repetitions of PDSCH use PRBs in symbols which are not occupied by the PUCCH uplink time-frequency resource. The UE receives repetitions of PDSCH based on the scheduling information of the base station. In Manner A, for initial transmission of PDSCH and each repetition of PDSCH (i.e., each repetition of transmitted downlink data corresponding to the PDSCH), one or more target PRBs can be selected from the first slot of the SBFD time-frequency resource. The target PRBs can be the PRBs in the symbols which are not occupied by the PUCCH uplink time-frequency resource. That is, the PRBs in the symbols which are not occupied by the PUCCH uplink time-frequency resource can be used as the target PRBs to participate in repetition of PDSCH. Then, the target PRBs can be selected as the available time-frequency resource, and repetition corresponding to the PDSCH can be transmitted on the available time-frequency resource, or the downlink data corresponding to the initial transmission of PDSCH can be transmitted on the available time-frequency resource.

Manner B: the base station configures the time-frequency resource used for PDSCH transmission based on the actual data size. For PDSCH on the SBFD time-frequency resource that overlaps with the PUCCH uplink time-frequency resource, downlink data corresponding to the PDSCH is transmitted on SBFD time-frequency resource that does not overlap with the PUCCH uplink time-frequency resource. For example, for initial transmission of PDSCH and multiple repetitions of PDSCH, one or more PRBs that are not occupied by the PUCCH uplink time-frequency resource can be used. The PRBs that are not occupied by the PUCCH uplink time-frequency resource can be PRBs in symbols which are not occupied by the PUCCH uplink time-frequency resource or PRBs in symbols which are occupied by the PUCCH uplink time-frequency resource.

FIG. 8 is a schematic diagram of a repetition of PDSCH overlapping with a PUCCH uplink time-frequency resource. The initial transmission of PDSCH is in slot 3, and the repetition of PDSCH overlaps with the PUCCH uplink time-frequency resource in slot 4. In this case, all downlink data corresponding to the PDSCH is normally transmitted in slot 3. However, during the repetition of PDSCH in slot 4, only part of the downlink data can be transmitted in the non-overlapping SBFD time-frequency resource. Similarly, if the time-frequency resource of initial transmission of PDSCH overlaps with the PUCCH uplink time-frequency resource, downlink data corresponding to the initial transmission of PDSCH is only transmitted in the non-overlapping SBFD time-frequency resource.

In Manner B, for initial transmission of PDSCH and each repetition of PDSCH, the target PRBs can be selected from the first slot of the SBFD time-frequency resource. The target PRBs can be the PRBs that are not occupied by the PUCCH uplink time-frequency resource. That is, the PRBs that are not occupied by the PUCCH uplink time-frequency resource can be used as the target PRBs to participate in initial transmission of PDSCH or repetition of PDSCH. Then, the target PRBs can be selected as the available time-frequency resource and the downlink data corresponding to the PDSCH can be transmitted on the available time-frequency resource.

In an example, for PDSCH retransmission based on HARQ feedback, DCI is needed for scheduling. If the SBFD time-frequency resource that does not overlap with the PUCCH uplink time-frequency resource is enough for PDSCH retransmission, the base station schedules PDSCH retransmission in the SBFD time-frequency resource. The UE receives downlink data corresponding to PDSCH retransmission according to scheduling information. If the SBFD time-frequency resource that does not overlap with the PUCCH uplink time-frequency resource is not enough to send the downlink data corresponding to PDSCH retransmission, the base station may not schedule PDSCH retransmission in the SBFD time-frequency resource. The UE will not receive the downlink data corresponding to PDSCH retransmission in the SBFD time-frequency resource. Or, the base station schedules PDSCH retransmission in the SBFD time-frequency resource. However, the base station only sends part of PDSCH retransmission data according to the available resource size. The UE also receives PDSCH retransmission data in the non-overlapping SBFD time-frequency resource according to scheduling information.

Scheme 2: downlink data corresponding to the PDSCH is performed rate matching around the PUCCH in the SBFD time-frequency resource. In Scheme 2, the base station schedules the PDSCH in the SBFD time-frequency resource that overlaps with the PUCCH uplink time-frequency resource. However, the downlink data corresponding to the PDSCH is sent in all PRBs that are not occupied by the PUCCH uplink time-frequency resource. Different from the case of the SRS, in which the PDSCH is performed rate matching at RE level around the SRS, the PDSCH is performed rate matching at PRB level around the PUCCH. As shown in FIG. 7, in symbols #10 to #13, all PRBs except PRBs #0 to #15 can be used for PDSCH transmission. To sum up, it can be seen that for the full duplex UE, when the channel type carried on the uplink time-frequency resource is PUCCH, if the first slot in the SBFD time-frequency resource overlaps with the second slot in the PUCCH uplink time-frequency resource, and the PRBs in the first slot overlap with the PRBs in the second slot, the target PRBs can be selected from the first slot of the SBFD time-frequency resource. The target PRBs are PRBs which are not occupied by the PUCCH uplink time-frequency resource. The target PRBs are selected as the available time-frequency resource, and the downlink data corresponding to the PDSCH is sent on the available time-frequency resource.

In an example, for the location of the time-frequency resource occupied by the PUCCH, the base station configures it to the UE through RRC signaling. The base station can perform rate matching on the PDSCH based on the effective location of the PUCCH resource, and the UE can perform rate de-matching on the PDSCH around the PUCCH time-frequency resource according to configuration of the PUCCH resource. Similarly, for repetition of PDSCH and PDSCH retransmission based on HARQ feedback transmitted in the SBFD time-frequency resource that overlaps with the PUCCH uplink time-frequency resource, it is necessary to perform rate matching around the PUCCH in the SBFD time-frequency resource that overlaps with the PUCCH according to the above scheme, which is not repeated herein.

From the perspective of the UE, the choice of scheme (Scheme 1 or Scheme 2) for single PDSCH transmission and PDSCH transmission based on HARQ can be determined during the dynamic scheduling process. If the UE determines that the SBFD time-frequency resource occupied by the dynamic scheduling PDSCH does not overlap with the PUCCH uplink time-frequency resource, it can be determined that the choice is Scheme 1. Otherwise, it can be determined that the choice is Scheme 2, and the UE can perform rate matching on the PDSCH around the PUCCH. For the repetition of PDSCH, the UE cannot determine which scheme to adopt based on parameters of the repetition of PDSCH, so there can be dedicated indication parameters.

The number of repetitions of PDSCH is configured through a RRC parameter pdsch-AggregationFactor or RepetitionSchemeConfig-r16. Therefore, when repetitions of PDSCH are performed in the SBFD time-frequency resource that overlaps with the PUCCH uplink time-frequency resource, the RRC parameter is also used to indicate which scheme to adopt.

For example, when using the pdsch-AggregationFactor configuration to indicate whether to adopt Scheme 1 or Scheme 2, a new parameter pdsch-AggregationMultiplexingWithPUCCHInSbfd: pdsch-AggregationMultiplexingWithPUCCHInSbfd ENUMERATED {noTx, rm} option can be introduced. This parameter can be referred to as an indication parameter for the repetition of PDSCH and PUCCH multiplexing mode. If pdsch-AggregationFactor is not configured, pdsch-AggregationMultiplexingWithPUCCHInSbfd is also not configured. If pdsch-AggregationFactor is configured, pdsch-AggregationMultiplexingWithPUCCHInSbfd is used to indicate whether Scheme 1 or Scheme 2 is adopted. For example, if one of two options (noTx, rm) is selected, noTx means no transmission, and this option corresponds to Scheme 1, that is, Scheme 1 is adopted for processing; rm means rate matching, and this option corresponds to Scheme 2, that is, Scheme 2 is adopted for processing.

For example, when using the RepetitionSchemeConfig-r16 configuration to indicate whether to use Scheme 1 or Scheme 2, a new parameter RepetitionMultiplexingWithPUCCH: RepetitionMultiplexingWithPUCCH ENUMERATED {noTx, rm} option can be introduced. This parameter can be referred to as an indication parameter for the repetition of PDSCH and PUCCH multiplexing mode. If RepetitionSchemeConfig-r16 is not configured, RepetitionMultiplexingWithPUCCH is also not configured. If Repetition SchemeConfig-r16 is configured, RepetitionMultiplexingWithPUCCH is used to indicate whether Scheme 1 or Scheme 2 is adopted. For example, if one of two options (noTx, rm) is selected, noTx means no transmission, and this option corresponds to Scheme 1; rm means rate matching, and this option corresponds to Scheme 2.

For the above parameters, if RepetitionSchemeConfig-r16 is configured, then pdsch-AggregationFactor is no longer configured. If RepetitionMultiplexingWithPUCCH is configured, then pdsch-AggregationMultiplexingWithPUCCHInSbfd is no longer configured.

In an example, for a semi-persistent scheduling (SPS) PDSCH, the time-frequency resource occupied by the PDSCH will be sent to the UE through DCI when the semi-static configuration is activated. Therefore, the above manners can also be used for SPS PDSCH, repetition of SPS PDSCH and retransmission based on HARQ feedback.

Case 4: a conflict between a SBFD time-frequency resource and a PUSCH uplink time-frequency resource, that is, the PDSCH carried by SBFD time-frequency resource conflicts with the PUSCH carried by an uplink time-frequency resource.

In an example, PUSCH is used to transmit uplink data. There are two types of PUSCH: dynamic grant (DG) PUSCH and configured grant (CG) PUSCH. When there is a situation where the PUSCH uplink time-frequency resource overlaps with the SBFD time-frequency resource, the transmission strategy of the PDSCH in the SBFD time-frequency resource can be determined based on the FD capability of the UE.

For a full duplex UE, since the full duplex UE can process uplink data and downlink data simultaneously, there is no need to consider the conflict between PDSCH and PUSCH. The UE can receive downlink data corresponding to the PDSCH while sending uplink data corresponding to the PUSCH.

To sum up, it can be seen that for the full duplex UE, when the channel type carried on the uplink time-frequency resource is PUSCH, if the first slot in the SBFD time-frequency resource overlaps with the second slot in the PUSCH uplink time-frequency resource, regardless of whether PRBs in the first slot overlap with PRBs in the second slot or not, it is determined that the SBFD time-frequency resource is the available time-frequency resource, and the downlink data corresponding to the PDSCH is sent on the SBFD time-frequency resource. If the first slot in the SBFD time-frequency resource does not overlap with the second slot in the PUSCH uplink time-frequency resource, it is determined that the SBFD time-frequency resource is the available time-frequency resource, and the downlink data corresponding to the PDSCH is sent on the SBFD time-frequency resource.

For a half duplex UE, as the half duplex UE can only transmit or receive on the time-frequency resource. That is, at the same time, the half duplex UE can only transmit or receive. Therefore, it is necessary to consider the conflict between PDSCH and PUSCH and define how to handle PDSCH in the SBFD time-frequency resource that overlaps with different types of PUSCH. If the first slot in the SBFD time-frequency resource does not overlap with the second slot in the PUSCH uplink time-frequency resource, it can be determined that the SBFD time-frequency resource is the available time-frequency resource, and the downlink data corresponding to the PDSCH can be sent on the SBFD time-frequency resource. If the first slot in the SBFD time-frequency resource overlaps with the second slot in the PUSCH uplink time-frequency resource, regardless of whether PRBs in the first slot overlap with PRBs in the second slot, or the PRBs in the first slot do not overlap with the PRBs in the second slot, then:

firstly, the priority of PUSCH for random access is higher than that of PDSCH. Secondly, the priority of dynamic scheduling is higher than that of semi-static scheduling. For example, the priority of dynamic scheduling PDSCH is higher than that of configured grant (CG) PUSCH, and the priority of dynamic scheduling PUSCH is higher than that of semi-persistent scheduling (SPS) PDSCH. If the scheduling type IS the same, that is, both PUSCH and PDSCH are dynamic scheduling or semi-static scheduling, processing is performed according to a PHY channel priority or a MAC channel priority. If the PHY channel priority or the MAC channel priority is the same, the priority of PUSCH and the priority of PDSCH are determined according to whether the initial transmission data or retransmission data are carried on PUSCH and PDSCH.

To sum up, it can be seen that for the half duplex UE, when the channel type carried on the PUSCH uplink time-frequency resource is PUSCH, the following manners can be adopted for processing.

Firstly, the data corresponding to the PUSCH carried on the PUSCH uplink time-frequency resource is determined. If the data is data for random access, it is determined that the SBFD time-frequency resource is an unavailable time-frequency resource. In this case, the uplink data corresponding to the PUSCH can be transmitted through the PUSCH uplink time-frequency resource, and the downlink data corresponding to the PDSCH cannot be transmitted through the SBFD time-frequency resource. If the data corresponding to the PUSCH is PUSCH (MSG3) scheduled by a random access response (RAR) or PUSCH occasion after MSG A, the data is data for random access. The PUSCH scheduled by RAR represents message 3 (MSG3) in the random access procedure of type 1. The PUSCH occasion after MSG A (PRACH) represents the PUSCH immediately following PRACH in the random access procedure of type 2.

If the data corresponding to the PUSCH is data not for random access, a first scheduling type corresponding to the PUSCH carried on the PUSCH uplink time-frequency resource can be determined, and a second scheduling type corresponding to the PDSCH carried on the SBFD time-frequency resource can be determined. If the first scheduling type is dynamic scheduling and the second scheduling type is semi-static scheduling, it can be determined that the SBFD time-frequency resource is an unavailable time-frequency resource. In this case, the uplink data corresponding to the PUSCH can be transmitted through the PUSCH uplink time-frequency resource, and the downlink data corresponding to the PDSCH cannot be transmitted through the SBFD time-frequency resource. Or, if the first scheduling type is semi-static scheduling and the second scheduling type is dynamic scheduling, all PRBs in the SBFD time-frequency resource can be selected as the available time-frequency resource. In this case, the downlink data corresponding to the PDSCH can be transmitted through the SBFD time-frequency resource, and the uplink data corresponding to the PUSCH cannot be transmitted through the PUSCH uplink time-frequency resource.

If both the first scheduling type and the second scheduling type are dynamic scheduling, or both the first scheduling type and the second scheduling type are semi-static scheduling, a first priority corresponding to the PUSCH carried on the PUSCH uplink time-frequency resource can be determined, and a second priority corresponding to the PDSCH carried on the SBFD time-frequency resource can be determined. The first priority can be the PHY channel priority, and the second priority can be the PHY channel priority. Or, the first priority can be the MAC channel priority, and the second priority can be the MAC channel priority. If the first priority is greater than the second priority, it can be determined that the SBFD time-frequency resource is an unavailable time-frequency resource. In this case, the uplink data corresponding to the PUSCH can be transmitted through the PUSCH uplink time-frequency resource, and the downlink data corresponding to the PDSCH cannot be transmitted through the SBFD time-frequency resource. Or, if the first priority is lower than the second priority, all PRBs in the SBFD time-frequency resource can be selected as the available time-frequency resource. In this case, the downlink data corresponding to the PDSCH can be transmitted through the SBFD time-frequency resource, and the uplink data corresponding to the PUSCH cannot be transmitted through the PUSCH uplink time-frequency resource.

If the first priority is equal to the second priority, if the PUSCH carried on the PUSCH uplink time-frequency resource corresponds to initially-transmitted data, and the PDSCH carried on the SBFD time-frequency resource corresponds to retransmission data, it can be determined that the SBFD time-frequency resource is an unavailable time-frequency resource. In this case, the uplink data corresponding to the PUSCH can be transmitted through the PUSCH uplink time-frequency resource, and the downlink data corresponding to the PDSCH cannot be transmitted through the SBFD time-frequency resource. If the PUSCH carried on the uplink time-frequency resource corresponds to retransmission data, and the PDSCH carried on the SBFD time-frequency resource corresponds to initially-transmitted data, all PRBs in the SBFD time-frequency resource can be selected as the available time-frequency resource. In this case, the downlink data corresponding to the PDSCH can be transmitted through the SBFD time-frequency resource, and the uplink data corresponding to PUSCH cannot be transmitted through the PUSCH uplink time-frequency resource. If the PUSCH carried on the uplink time-frequency resource corresponds to initially-transmitted data, and the PDSCH carried on the SBFD time-frequency resource corresponds to initially-transmitted data, all PRBs in the SBFD time-frequency resource can be selected as the available time-frequency resource. In this case, the downlink data corresponding to the PDSCH can be transmitted through the SBFD time-frequency resource, and the uplink data corresponding to the PUSCH cannot be transmitted through the PUSCH uplink time-frequency resource. If the PUSCH carried on the uplink time-frequency resource corresponds to retransmission data, and the PDSCH carried on the SBFD time-frequency resource corresponds to retransmission data, all PRBs in the SBFD time-frequency resource can be selected as the available time-frequency resource. In this case, the downlink data corresponding to the PDSCH can be transmitted through the SBFD time-frequency resource, and the uplink data corresponding to the PUSCH cannot be transmitted through the PUSCH uplink time-frequency resource.

In an example, the above scheduling strategy can be represented by Table 1. In Table 1, the scheduling strategy of PDSCH conflicting with different types of PUSCH in SBFD time-frequency resource is shown.

**Table 1**

| | DG PUSCH | DG PUSCH Repetition | CG PUSCH | CG PUSCH Repetition | PUSCH (MSG3) scheduled by RAR | PUSCH occasion after MSG A |
|---|---|---|---|---|---|---|
| DG PDSCH | PDSCH | PDSCH | PDSCH | PDSCH | PUSCH | PUSCH |
| DG PDSCH Repetition | PUSCH | PDSCH Repetition | PDSCH Repetition | PDSCH Repetition | PUSCH | PUSCH |
| SPS PDSCH | PUSCH | PUSCH Repetition | PDSCH | PDSCH | PUSCH | PUSCH |
| SPS PDSCH Repetition | PUSCH | PUSCH Repetition | PUSCH | PDSCH Repetition | PUSCH | PUSCH |

From the above technical solution, it can be seen that the downlink data corresponding to the PDSCH can be transmitted on the SBFD time-frequency resource, thereby more effectively utilizing the SBFD time-frequency resource, improving resource utilization, improving network coverage and network capacity, and reducing transmission delay, such as reducing downlink transmission delay. In the above solution, the scheduling mechanism of the PDSCH on the SBFD time-frequency resource conflicting with PRACH, SRS, PUCCH, and PUSCH is determined. For UEs with different capabilities, the mechanism of scheduling the PDSCH in the SBFD time-frequency resource is different. The scheduling mechanism of the base station and UEs for the PDSCH when the SBFD time-frequency resource conflicts with other resources can be defined, so as to avoid behavior ambiguity of the base station and UEs in this case, and ensure that both the base station and UEs can transmit the PDSCH normally in full duplex mode.

Based on the same invention concept, a data transmission apparatus and a base station corresponding to the above data transmission method are also provided. Since the principle of solving problems by the base station is similar to the data transmission method in the above examples, the implementation of the base station can refer to the implementation of the method, which will not be repeated herein.

Based on the same application concept as the above method, an example of the present disclosure provides a data transmission apparatus, applied to a base station. The apparatus can include: a determining module, configured to determine an overlapping between a sub-band full duplex (SBFD) time-frequency resource and an uplink time-frequency resource; an obtaining module, configured to select, based on the overlapping and a full duplex (FD) capability of a user equipment (UE), an available time-frequency resource from the SBFD time-frequency resource; and a transmitting module, configured to transmit downlink data corresponding to a physical downlink shared channel (PDSCH) on the available time-frequency resource.

In an example, when selecting, based on the overlapping and the FD capability of the UE, the available time-frequency resource from the SBFD time-frequency resource, the obtaining module is specifically configured to: if the overlapping is that a first slot in the SBFD time-frequency resource does not overlap with a second slot in the uplink time-frequency resource, when the FD capability is a FD mode or a non-FD mode, select the first slot in the SBFD time-frequency resource as the available time-frequency resource .

In an example, when selecting, based on the overlapping and the FD capability of the UE, the available time-frequency resource from the SBFD time-frequency resource, the obtaining module is specifically configured to: if the overlapping is that a first slot in the SBFD time-frequency resource overlaps with a second slot in the uplink time-frequency resource, and physical resource blocks (PRBs) in the first slot overlap with PRBs in the second slot, select the available time-frequency resource from the SBFD time-frequency resource based on the FD capability of the UE and a signal type or a channel type carried on the uplink time-frequency resource.

In an example, when selecting, based on the overlapping and the FD capability of the UE, the available time-frequency resource from the SBFD time-frequency resource, the obtaining module is specifically configured to: if the overlapping is that a first slot in the SBFD time-frequency resource overlaps with a second slot in the uplink time-frequency resource, and physical resource blocks (PRBs) in the first slot do not overlap with PRBs in the second slot, when the FD capability is a FD mode, select the PRBs in the first slot as the available time-frequency resource; when the FD capability is a non-FD mode, select the available time-frequency resource from the SBFD time-frequency resource based on the FD capability of the UE and a signal type or a channel type carried on the uplink time-frequency resource.

In an example, the signal type or the channel type carried on the uplink time-frequency resource includes: sounding reference signal (SRS), physical random access channel (PRACH), physical uplink control channel (PUCCH), physical uplink shared channel (PUSCH).

In an example, the obtaining module is further configured to: if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical random access channel (PRACH) and the FD capability is a non-FD mode, determine that the SBFD time-frequency resource is an unavailable time-frequency resource.

In an example, the obtaining module is further configured to: if the overlapping is that the first slot in the SBFD time-frequency resource overlaps with the second slot in the uplink time-frequency resource, and the PRBs in the first slot overlap with the PRBs in the second slot, if the channel type carried on the uplink time-frequency resource is physical random access channel (PRACH) and the FD capability is a FD mode, determine that the SBFD time-frequency resource is an unavailable time-frequency resource.

In an example, the obtaining module is further configured to: if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a non-FD mode, and a channel type carried on the uplink time-frequency resource is physical random access channel (PRACH), determine that the SBFD time-frequency resource is an unavailable time-frequency resource.

In an example, when selecting, if the PRBs in the first slot do not overlap with the PRBs in the second slot, the PRBs in the first slot as the available time-frequency resource, the obtaining module is specifically configured to: if the FD capability is the FD mode, and the channel type carried on the uplink time-frequency resource is physical random access channel (PRACH), select all PRBs in the first slot of the SBFD time-frequency resource as the available time-frequency resource.

In an example, the obtaining module is further configured to: if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a FD mode, and a channel type carried on the uplink time-frequency resource is physical random access channel (PRACH), determine that the SBFD time-frequency resource is an unavailable time-frequency resource.

In an example, the obtaining module is further configured to: if the overlapping is that a first slot in the SBFD time-frequency resource overlaps with a second slot in the uplink time-frequency resource, and physical resource blocks (PRBs) in the first slot overlap with PRBs in the second slot, if a signal type carried on the uplink time-frequency resource is sounding reference signal (SRS), and the FD capability is a non-FD mode, determine that the SBFD time-frequency resource is an unavailable time-frequency resource.

In an example, when selecting, if the PRBs in the first slot overlap with the PRBs in the second slot, the available time-frequency resource from the SBFD time-frequency resource based on the FD capability of the UE and the signal type or the channel type carried on the uplink time-frequency resource, the obtaining module is specifically configured to: if the signal type carried on the uplink time-frequency resource is sounding reference signal (SRS), and the FD capability is a FD mode, select one or more first target PRBs in the first slot of the SBFD time-frequency resource as the available time-frequency resource, where the one or more first target PRBs are PRBs in symbols which are not occupied by the uplink time-frequency resource.

In an example, the obtaining module is further configured to: if the overlapping is that a first slot in the SBFD time-frequency resource overlaps with a second slot in the uplink time-frequency resource, and a physical resource blocks (PRBs) in the first slot overlap with PRBs in the second slot, if a signal type carried on the uplink time-frequency resource is sounding reference signal (SRS), and the FD capability is a FD mode, for each repetition of transmitted downlink data corresponding to the PDSCH, select one or more second target PRBs in the first slot of the SBFD time-frequency resource as the available time-frequency resource, and send the repetition of transmitted downlink data through the available time-frequency resource; where the one or more second target PRBs are PRBs in symbols which are not occupied by the uplink time-frequency resource.

In an example, the obtaining module is further configured to: if the overlapping is that a first slot in the SBFD time-frequency resource overlaps with a second slot in the uplink time-frequency resource, and physical resource blocks (PRBs) in the first slot overlap with PRBs in the second slot, if a signal type carried on the uplink time-frequency resource is sounding reference signal (SRS), and the FD capability is a FD mode, for each repetition of transmitted downlink data corresponding to the PDSCH, select one or more third target PRBs in the first slot of the SBFD time-frequency resource as the available time-frequency resource, and send the repetition of transmitted downlink data through the available time-frequency resource; where the one or more third target PRBs are PRBs which are not occupied by the uplink time-frequency resource.

In an example, when selecting, if the PRBs in the first slot overlap with the PRBs in the second slot, the available time-frequency resource from the SBFD time-frequency resource based on the FD capability of the UE and the signal type or the channel type carried on the uplink time-frequency resource, the obtaining module is specifically configured to: if the signal type carried on the uplink time-frequency resource is sounding reference signal (SRS), and the FD capability is a FD mode, select one or more fourth target PRBs from the first slot of the SBFD time-frequency resource, where the one or more fourth target PRBs include a first resource element (RE) resource which is not occupied by the uplink time-frequency resource and a second RE resource which is occupied by the uplink time-frequency resource, and select the first RE resource of the one or more fourth target PRBs as the available time-frequency resource.

In an example, the obtaining module is further configured to: if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a non-FD mode, and a signal type carried on the uplink time-frequency resource is sounding reference signal (SRS), determine that the SBFD time-frequency resource is an unavailable time-frequency resource.

In an example, when selecting, if the PRBs in the first slot do not overlap with the PRBs in the second slot, the PRBs in the first slot as the available time-frequency resource, the obtaining module is specifically configured to: if the FD capability is the FD mode, and the signal type carried on the uplink time-frequency resource is sounding reference signal (SRS), select all PRBs in the first slot of the SBFD time-frequency resource as the available time-frequency resource.

In an example, the obtaining module is further configured to: if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical uplink control channel (PUCCH), and the FD capability is a non-FD mode, determine that the SBFD time-frequency resource is an unavailable time-frequency resource.

In an example, when selecting, if the PRBs in the first slot overlap with the PRBs in the second slot, the available time-frequency resource from the SBFD time-frequency resource based on the FD capability of the UE and the signal type or the channel type carried on the uplink time-frequency resource, the obtaining module is specifically configured to: if the channel type carried on the uplink time-frequency resource is physical uplink control channel (PUCCH), and the FD capability is a FD mode, select one or more first target PRBs in the first slot of the SBFD time-frequency resource as the available time-frequency resource, where the one or more first target PRBs are PRBs in symbols which are not occupied by the uplink time-frequency resource.

In an example, the obtaining module is further configured to: if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical uplink control channel (PUCCH), and the FD capability is a FD mode, for each repetition of transmitted downlink data corresponding to the PDSCH, select one or more second target PRBs in the first slot of the SBFD time-frequency resource as the available time-frequency resource, and send the repetition of transmitted downlink data through the available time-frequency resource; where the one or more second target PRBs are PRBs in symbols which are not occupied by the uplink time-frequency resource.

In an example, the obtaining module is further configured to: if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical uplink control channel (PUCCH), and the FD capability is a FD mode, for each repetition of transmitted downlink data corresponding to the PDSCH, select one or more third target PRBs in the first slot of the SBFD time-frequency resource as the available time-frequency resource, and send the repetition of transmitted downlink data through the available time-frequency resource; where the one or more third target PRBs are PRBs which are not occupied by the uplink time-frequency resource.

In an example, when selecting, if the PRBs in the first slot overlap with the PRBs in the second slot, the available time-frequency resource from the SBFD time-frequency resource based on the FD capability of the UE and the signal type or the channel type carried on the uplink time-frequency resource, the obtaining module is specifically configured to: if the channel type carried on the uplink time-frequency resource is physical uplink control channel (PUCCH), and the FD capability is a FD mode, select one or more fourth target PRBs from the first slot of the SBFD time-frequency resource, where the one or more fourth target PRBs are PRBs which are not occupied by the uplink time-frequency resource, and select the one or more fourth target PRBs as the available time-frequency resource.

In an example, the obtaining module is further configured to: if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a non-FD mode, and a channel type carried on the uplink time-frequency resource is physical uplink control channel (PUCCH), determine that the SBFD time-frequency resource is an unavailable time-frequency resource.

In an example, when selecting, if the PRBs in the first slot do not overlap with the PRBs in the second slot, the PRBs in the first slot as the available time-frequency resource, the obtaining module is specifically configured to: if the FD capability is the FD mode, and the channel type carried on the uplink time-frequency resource is physical uplink control channel (PUCCH), select all PRBs in the first slot of the SBFD time-frequency resource as the available time-frequency resource.

In an example, if the overlapping is that a first slot in the SBFD time-frequency resource overlaps with a second slot in the uplink time-frequency resource, and physical resource blocks (PRBs) in the first slot overlap with PRBs in the second slot or the PRBs in the first slot do not overlap with the PRBs in the second slot, the obtaining module is further configured to: if a channel type carried on the uplink time-frequency resource is physical uplink shared channel (PUSCH), and the FD capability is a non-FD mode, determine data corresponding to the PUSCH carried on the uplink time-frequency resource; and if the data is data for random access, determine that the SBFD time-frequency resource is an unavailable time-frequency resource.

In an example, if the data is data not for random access, the obtaining module is further configured to: determine a first scheduling type corresponding to the PUSCH carried on the uplink time-frequency resource; determine a second scheduling type corresponding to the PDSCH carried on the SBFD time-frequency resource; and if the first scheduling type is dynamic scheduling and the second scheduling type is semi-static scheduling, determine that the SBFD time-frequency resource is an unavailable time-frequency resource; if the first scheduling type is semi-static scheduling and the second scheduling type is dynamic scheduling, select all PRBs in the SBFD time-frequency resource as the available time-frequency resource.

In an example, if both the first scheduling type and the second scheduling type are dynamic scheduling, or both the first scheduling type and the second scheduling type are semi-static scheduling, the obtaining module is further configured to: determine a first priority corresponding to the PUSCH carried on the uplink time-frequency resource; determine a second priority corresponding to the PDSCH carried on the SBFD time-frequency resource; and if the first priority is greater than the second priority, determine that the SBFD time-frequency resource is an unavailable time-frequency resource; if the first priority is lower than the second priority, select all PRBs in the SBFD time-frequency resource as the available time-frequency resource.

In an example, if the first priority is equal to the second priority, the obtaining module is further configured to: if the PUSCH carried on the uplink time-frequency resource corresponds to initially-transmitted data, and the PDSCH carried on the SBFD time-frequency resource corresponds to retransmission data, determine that the SBFD time-frequency resource is an unavailable time-frequency resource; if the PUSCH carried on the uplink time-frequency resource corresponds to retransmission data, and the PDSCH carried on the SBFD time-frequency resource corresponds to initially-transmitted data, select all PRBs in the SBFD time-frequency resource as the available time-frequency resource; if the PUSCH carried on the uplink time-frequency resource corresponds to initially-transmitted data, and the PDSCH carried on the SBFD time-frequency resource corresponds to initially-transmitted data, select all PRBs in the SBFD time-frequency resource as the available time-frequency resource; or if the PUSCH carried on the uplink time-frequency resource corresponds to retransmission data, and the PDSCH carried on the SBFD time-frequency resource corresponds to retransmission data, select all PRBs in the SBFD time-frequency resource as the available time-frequency resource.

In an example, when selecting, if the PRBs in the first slot overlap with the PRBs in the second slot, the available time-frequency resource from the SBFD time-frequency resource based on the FD capability of the UE and the signal type or the channel type carried on the uplink time-frequency resource, the obtaining module is specifically configured to: if the channel type carried on the uplink time-frequency resource is physical uplink shared channel (PUSCH), and the FD capability is a FD mode, select all PRBs in the first slot of the SBFD time-frequency resource as the available time-frequency resource.

In an example, when selecting, if the PRBs in the first slot do not overlap with the PRBs in the second slot, the PRBs in the first slot as the available time-frequency resource, the obtaining module is specifically configured to: if the FD capability is the FD mode, and the channel type carried on the uplink time-frequency resource is physical uplink shared channel (PUSCH), select all PRBs in the first slot of the SBFD time-frequency resource as the available time-frequency resource.

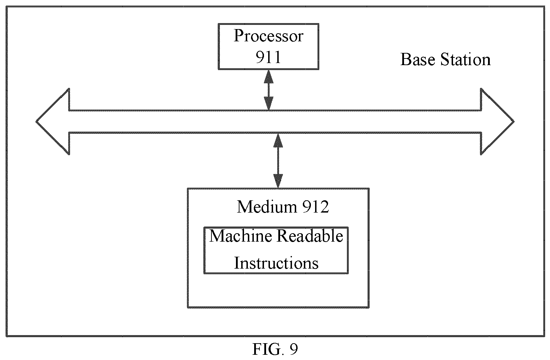

Based on the same application concept as the above method, an example of the present disclosure provides a base station. As shown in FIG. 9, the base station includes a processor 911 and a machine readable storage medium 912. The machine readable storage medium 912 stores machine executable instructions that can be executed by the processor 911. The processor 911 is configured to execute the machine executable instructions to implement the data transmission method disclosed in the above examples of the present disclosure.

In an example, when the machine executable instructions are executed by the processor 911, the following processing is performed: determining an overlapping between a sub-band full duplex (SBFD) time-frequency resource and an uplink time-frequency resource; based on the overlapping and a full duplex (FD) capability of a user equipment (UE), selecting an available time-frequency resource from the SBFD time-frequency resource; and transmitting downlink data corresponding to a physical downlink shared channel (PDSCH) on the available time-frequency resource.

In an example, in the processing performed by the processor 911, based on the overlapping and the FD capability of the UE, selecting the available time-frequency resource from the SBFD time-frequency resource, includes: if the overlapping is that a first slot in the SBFD time-frequency resource does not overlap with a second slot in the uplink time-frequency resource, when the FD capability is a FD mode or a non-FD mode, selecting the first slot in the SBFD time-frequency resource as the available time-frequency resource.

In an example, in the processing performed by the processor 911, based on the overlapping and the FD capability of the UE, selecting the available time-frequency resource from the SBFD time-frequency resource, includes: if the overlapping is that a first slot in the SBFD time-frequency resource overlaps with a second slot in the uplink time-frequency resource, and physical resource blocks (PRBs) in the first slot overlap with PRBs in the second slot, selecting the available time-frequency resource from the SBFD time-frequency resource based on the FD capability of the UE and a signal type or a channel type carried on the uplink time-frequency resource.

In an example, in the processing performed by the processor 911, based on the overlapping and the FD capability of the UE, selecting the available time-frequency resource from the SBFD time-frequency resource, includes: if the overlapping is that a first slot in the SBFD time-frequency resource overlaps with a second slot in the uplink time-frequency resource, and physical resource blocks (PRBs) in the first slot do not overlap with PRBs in the second slot, when the FD capability is a FD mode, selecting the PRBs in the first slot as the available time-frequency resource; when the FD capability is a non-FD mode, selecting the available time-frequency resource from the SBFD time-frequency resource based on the FD capability of the UE and a signal type or a channel type carried on the uplink time-frequency resource.

In an example, in the processing performed by the processor 911, the signal type or the channel type carried on the uplink time-frequency resource includes: sounding reference signal (SRS), physical random access channel (PRACH), physical uplink control channel (PUCCH), physical uplink shared channel (PUSCH).

In an example, when the machine executable instructions are executed by the processor 911, the following processing is further performed: if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical random access channel (PRACH) and the FD capability is a non-FD mode, determining that the SBFD time-frequency resource is an unavailable time-frequency resource.

In an example, when the machine executable instructions are executed by the processor 911, the following processing is further performed: if the overlapping is that the first slot in the SBFD time-frequency resource overlaps with the second slot in the uplink time-frequency resource, and the PRBs in the first slot overlap with the PRBs in the second slot, if the channel type carried on the uplink time-frequency resource is physical random access channel (PRACH) and the FD capability is a FD mode, determining that the SBFD time-frequency resource is an unavailable time-frequency resource.

In an example, when the machine executable instructions are executed by the processor 911, the following processing is further performed: if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a non-FD mode, and a channel type carried on the uplink time-frequency resource is physical random access channel (PRACH), determining that the SBFD time-frequency resource is an unavailable time-frequency resource.

In an example, in the processing performed by the processor 911, if the PRBs in the first slot do not overlap with the PRBs in the second slot, selecting the PRBs in the first slot as the available time-frequency resource includes: if the FD capability is the FD mode, and the channel type carried on the uplink time-frequency resource is physical random access channel (PRACH), selecting all PRBs in the first slot of the SBFD time-frequency resource as the available time-frequency resource.

In an example, when the machine executable instructions are executed by the processor 911, the following processing is further performed: if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a FD mode, and a channel type carried on the uplink time-frequency resource is physical random access channel (PRACH), determining that the SBFD time-frequency resource is an unavailable time-frequency resource.

In an example, when the machine executable instructions are executed by the processor 911, the following processing is further performed: if the overlapping is that a first slot in the SBFD time-frequency resource overlaps with a second slot in the uplink time-frequency resource, and physical resource blocks (PRBs) in the first slot overlap with PRBs in the second slot, if a signal type carried on the uplink time-frequency resource is sounding reference signal (SRS), and the FD capability is a non-FD mode, determining that the SBFD time-frequency resource is an unavailable time-frequency resource.

In an example, in the processing performed by the processor 911, if the PRBs in the first slot overlap with the PRBs in the second slot, selecting the available time-frequency resource from the SBFD time-frequency resource based on the FD capability of the UE and the signal type or the channel type carried on the uplink time-frequency resource, includes: if the signal type carried on the uplink time-frequency resource is sounding reference signal (SRS), and the FD capability is a FD mode, selecting one or more first target PRBs in the first slot of the SBFD time-frequency resource as the available time-frequency resource, where the one or more first target PRBs are PRBs in symbols which are not occupied by the uplink time-frequency resource.

In an example, when the machine executable instructions are executed by the processor 911, the following processing is further performed: if the overlapping is that a first slot in the SBFD time-frequency resource overlaps with a second slot in the uplink time-frequency resource, and physical resource blocks (PRBs) in the first slot overlap with PRBs in the second slot, if a signal type carried on the uplink time-frequency resource is sounding reference signal (SRS), and the FD capability is a FD mode, for each repetition of transmitted downlink data corresponding to the PDSCH,
selecting one or more second target PRBs in the first slot of the SBFD time-frequency resource as the available time-frequency resource, and sending the repetition of transmitted downlink data through the available time-frequency resource; where the one or more second target PRBs are PRBs in symbols which are not occupied by the uplink time-frequency resource.

In an example, when the machine executable instructions are executed by the processor 911, the following processing is further performed: if the overlapping is that a first slot in the SBFD time-frequency resource overlaps with a second slot in the uplink time-frequency resource, and physical resource blocks (PRBs) in the first slot overlap with PRBs in the second slot, if a signal type carried on the uplink time-frequency resource is sounding reference signal (SRS), and the FD capability is a FD mode, for each repetition of transmitted downlink data corresponding to the PDSCH,
selecting one or more third target PRBs in the first slot of the SBFD time-frequency resource as the available time-frequency resource, and sending the repetition of transmitted downlink data through the available time-frequency resource; where the one or more third target PRBs are PRBs which are not occupied by the uplink time-frequency resource.

In an example, in the processing performed by the processor 911, if the PRBs in the first slot overlap with the PRBs in the second slot, selecting the available time-frequency resource from the SBFD time-frequency resource based on the FD capability of the UE and the signal type or the channel type carried on the uplink time-frequency resource, includes: if the signal type carried on the uplink time-frequency resource is sounding reference signal (SRS), and the FD capability is a FD mode, selecting one or more fourth target PRBs from the first slot of the SBFD time-frequency resource, where the one or more fourth target PRBs include a first resource element (RE) resource which is not occupied by the uplink time-frequency resource and a second RE resource which is occupied by the uplink time-frequency resource, and selecting the first RE resource of the one or more fourth target PRBs as the available time-frequency resource.

In an example, when the machine executable instructions are executed by the processor 911, the following processing is further performed: if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a non-FD mode, and a signal type carried on the uplink time-frequency resource is sounding reference signal (SRS), determining that the SBFD time-frequency resource is an unavailable time-frequency resource.

In an example, in the processing performed by the processor 911, if the PRBs in the first slot do not overlap with the PRBs in the second slot, selecting the PRBs in the first slot as the available time-frequency resource includes: if the FD capability is the FD mode, and the signal type carried on the uplink time-frequency resource is sounding reference signal (SRS), selecting all PRBs in the first slot of the SBFD time-frequency resource as the available time-frequency resource.

In an example, when the machine executable instructions are executed by the processor 911, the following processing is further performed: if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical uplink control channel (PUCCH), and the FD capability is a non-FD mode, determining that the SBFD time-frequency resource is an unavailable time-frequency resource.

In an example, in the processing performed by the processor 911, if the PRBs in the first slot overlap with the PRBs in the second slot, selecting the available time-frequency resource from the SBFD time-frequency resource based on the FD capability of the UE and the signal type or the channel type carried on the uplink time-frequency resource, includes: if the channel type carried on the uplink time-frequency resource is physical uplink control channel (PUCCH), and the FD capability is a FD mode, selecting one or more first target PRBs in the first slot of the SBFD time-frequency resource as the available time-frequency resource, where the one or more first target PRBs are PRBs in symbols which are not occupied by the uplink time-frequency resource.

In an example, when the machine executable instructions are executed by the processor 911, the following processing is further performed: if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical uplink control channel (PUCCH), and the FD capability is a FD mode, for each repetition of transmitted downlink data corresponding to the PDSCH,
selecting one or more second target PRBs in the first slot of the SBFD time-frequency resource as the available time-frequency resource, and sending the repetition of transmitted downlink data through the available time-frequency resource; where the one or more second target PRBs are PRBs in symbols which are not occupied by the uplink time-frequency resource.

In an example, when the machine executable instructions are executed by the processor 911, the following processing is further performed: if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical uplink control channel (PUCCH), and the FD capability is a FD mode, for each repetition of transmitted downlink data corresponding to the PDSCH, selecting one or more third target PRBs in the first slot of the SBFD time-frequency resource as the available time-frequency resource, and sending the repetition of transmitted downlink data through the available time-frequency resource; where the one or more third target PRBs are PRBs which are not occupied by the uplink time-frequency resource.

In an example, in the processing performed by the processor 911, if the PRBs in the first slot overlap with the PRBs in the second slot, selecting the available time-frequency resource from the SBFD time-frequency resource based on the FD capability of the UE and the signal type or the channel type carried on the uplink time-frequency resource, includes: if the channel type carried on the uplink time-frequency resource is physical uplink control channel (PUCCH), and the FD capability is a FD mode, selecting one or more fourth target PRBs from the first slot of the SBFD time-frequency resource, where the one or more fourth target PRBs are PRBs which are not occupied by the uplink time-frequency resource, and selecting the one or more fourth target PRBs as the available time-frequency resource.

In an example, when the machine executable instructions are executed by the processor 911, the following processing is further performed: if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a non-FD mode, and a channel type carried on the uplink time-frequency resource is physical uplink control channel (PUCCH), determining that the SBFD time-frequency resource is an unavailable time-frequency resource.

In an example, in the processing performed by the processor 911, if the PRBs in the first slot do not overlap with the PRBs in the second slot, selecting the PRBs in the first slot as the available time-frequency resource includes: if the FD capability is the FD mode, and the channel type carried on the uplink time-frequency resource is physical uplink control channel (PUCCH), selecting all PRBs in the first slot of the SBFD time-frequency resource as the available time-frequency resource.

In an example, when the machine executable instructions are executed by the processor 911, the following processing is further performed: if the overlapping is that a first slot in the SBFD time-frequency resource overlaps with a second slot in the uplink time-frequency resource, and physical resource blocks (PRBs) in the first slot overlap with PRBs in the second slot or the PRBs in the first slot do not overlap with the PRBs in the second slot, the method further includes: if a channel type carried on the uplink time-frequency resource is physical uplink shared channel (PUSCH), and the FD capability is a non-FD mode, determining data corresponding to the PUSCH carried on the uplink time-frequency resource; and if the data is data for random access, determining that the SBFD time-frequency resource is an unavailable time-frequency resource.

In an example, when the machine executable instructions are executed by the processor 911, the following processing is further performed: if the data is data not for random access, the method further includes: determining a first scheduling type corresponding to the PUSCH carried on the uplink time-frequency resource; determining a second scheduling type corresponding to the PDSCH carried on the SBFD time-frequency resource; and if the first scheduling type is dynamic scheduling and the second scheduling type is semi-static scheduling, determining that the SBFD time-frequency resource is an unavailable time-frequency resource; if the first scheduling type is semi-static scheduling and the second scheduling type is dynamic scheduling, selecting all PRBs in the SBFD time-frequency resource as the available time-frequency resource.

In an example, when the machine executable instructions are executed by the processor 911, the following processing is further performed: if both the first scheduling type and the second scheduling type are dynamic scheduling, or both the first scheduling type and the second scheduling type are semi-static scheduling, the method further includes: determining a first priority corresponding to the PUSCH carried on the uplink time-frequency resource; determining a second priority corresponding to the PDSCH carried on the SBFD time-frequency resource; and if the first priority is greater than the second priority, determining that the SBFD time-frequency resource is an unavailable time-frequency resource; if the first priority is lower than the second priority, selecting all PRBs in the SBFD time-frequency resource as the available time-frequency resource.

In an example, when the machine executable instructions are executed by the processor 911, the following processing is further performed: if the PUSCH carried on the uplink time-frequency resource corresponds to initially-transmitted data, and the PDSCH carried on the SBFD time-frequency resource corresponds to retransmission data, determining that the SBFD time-frequency resource is an unavailable time-frequency resource; if the PUSCH carried on the uplink time-frequency resource corresponds to retransmission data, and the PDSCH carried on the SBFD time-frequency resource corresponds to initially-transmitted data, selecting all PRBs in the SBFD time-frequency resource as the available time-frequency resource; if the PUSCH carried on the uplink time-frequency resource corresponds to initially-transmitted data, and the PDSCH carried on the SBFD time-frequency resource corresponds to initially-transmitted data, selecting all PRBs in the SBFD time-frequency resource as the available time-frequency resource; or if the PUSCH carried on the uplink time-frequency resource corresponds to retransmission data, and the PDSCH carried on the SBFD time-frequency resource corresponds to retransmission data, selecting all PRBs in the SBFD time-frequency resource as the available time-frequency resource.

In an example, in the processing performed by the processor 911, if the PRBs in the first slot overlap with the PRBs in the second slot, selecting the available time-frequency resource from the SBFD time-frequency resource based on the FD capability of the UE and the signal type or the channel type carried on the uplink time-frequency resource, includes: if the channel type carried on the uplink time-frequency resource is physical uplink shared channel (PUSCH), and the FD capability is a FD mode, selecting all PRBs in the first slot of the SBFD time-frequency resource as the available time-frequency resource.

In an example, in the processing performed by the processor 911, if the PRBs in the first slot do not overlap with the PRBs in the second slot, selecting the PRBs in the first slot as the available time-frequency resource includes: if the FD capability is the FD mode, and the channel type carried on the uplink time-frequency resource is physical uplink shared channel (PUSCH), selecting all PRBs in the first slot of the SBFD time-frequency resource as the available time-frequency resource.

Based on the same concept as the above data transmission method, an example of the present disclosure also provides a machine readable storage medium, on which several computer instructions are stored. When the computer instructions are executed by a processor, the data transmission method disclosed in the above examples of the present disclosure can be implemented.

The above machine readable storage medium can be any electronic, magnetic, optical or other physical storage apparatuses, which can contain or store information, such as executable instructions, data. For example, the machine readable storage medium can be a random access memory (RAM), a volatile memory, a non-volatile memory, a flash memory, a storage drive (such as a hard disk drive), a solid state drive, any type of storage disk (such as an optical disk, a DVD), or similar storage media, or a combination of them.

The system, apparatus, modules or units described in the above embodiments can be implemented by computer chips or entities, or by products with certain functions. A typical implementation device is a computer, and the specific form of the computer can be a personal computer, a laptop computer, a cellular phone, a camera phone, a smart phone, a personal digital assistant, a media player, a navigation device, an email transceiver, a game console, a tablet computer, a wearable device or a combination of any of these devices.

For the convenience of description, the above apparatuses are described by dividing their functions into various units. In implementing the present disclosure, the functions of each unit can be implemented in one or more pieces of software and/or hardware.

Those skilled in the art should understand that the embodiments of the present disclosure can be provided as methods, systems or computer program products. Therefore, the present disclosure can adopt the form of a complete hardware embodiment, a complete software embodiment, or an embodiment combining software and hardware. Moreover, the embodiments of the present disclosure can take the form of computer program products implemented on one or more computer-usable storage media (including but not limited to disk storage, CD-ROM, optical storage, or the like) containing computer-usable program codes.

The present disclosure refers to the flowchart and/or block diagram of the method, the device (system), and the computer program product according to the embodiments of the present disclosure. It should be understood that each process and/or block in the flowchart and/or block diagram, and the combination of processes and/or blocks in the flowchart and/or block diagram can be realized by computer program instructions. These computer program instructions can be provided to a processor of a general-purpose computer, a special-purpose computer, an embedded processor, or other programmable data processing device to generate a machine, such that the instructions executed by the processor of the computer or other programmable data processing device produce means for implementing the functions designated in one or more processes in the flowchart and/or one or more blocks in the block diagram.

Moreover, these computer program instructions can also be stored in a computer-readable memory which can guide a computer or other programmable data processing device to operate in a specific manner, such that the instructions stored in the computer-readable memory produce an article of manufacture including an instruction apparatus, which implements the functions designated in one or more processes in the flowchart and/or one or more blocks in the block diagram.

These computer program instructions can also be loaded on a computer or other programmable data processing device, such that a series of operation steps are executed on a computer or other programmable device to produce computer-implemented processing, such that the instructions executed on the computer or other programmable device provide steps to implement the functions designated in one or more processes in the flowchart and/or one or more blocks in the block diagram.

The above descriptions are only the examples of the present disclosure and are not intended to limit the present disclosure. For those skilled in the art, there may be various changes and variations in the present application. Any modification, equivalent replacement, improvement, and the like made within the spirit and principle of the present disclosure shall be included within the protection scope of the present disclosure.

## Claims

1. A data transmission method, applied to a base station, the method comprising:
determining an overlapping between a sub-band full duplex (SBFD) time-frequency resource and an uplink time-frequency resource;
based on the overlapping and a full duplex (FD) capability of a user equipment (UE), selecting an available time-frequency resource from the SBFD time-frequency resource; and
transmitting downlink data corresponding to a physical downlink shared channel (PDSCH) on the available time-frequency resource.

2. The method according to claim 1, wherein, based on the overlapping and the FD capability of the UE, selecting the available time-frequency resource from the SBFD time-frequency resource, comprising:
if the overlapping is that a first slot in the SBFD time-frequency resource does not overlap with a second slot in the uplink time-frequency resource, when the FD capability is a FD mode or a non-FD mode, selecting the first slot in the SBFD time-frequency resource as the available time-frequency resource.

3. The method according to claim 1, wherein, based on the overlapping and the FD capability of the UE, selecting the available time-frequency resource from the SBFD time-frequency resource, comprising:
if the overlapping is that a first slot in the SBFD time-frequency resource overlaps with a second slot in the uplink time-frequency resource, and physical resource blocks (PRBs) in the first slot overlap with PRBs in the second slot, selecting the available time-frequency resource from the SBFD time-frequency resource based on the FD capability of the UE and a signal type or a channel type carried on the uplink time-frequency resource.

4. The method according to claim 1, wherein, based on the overlapping and the FD capability of the UE, selecting the available time-frequency resource from the SBFD time-frequency resource, comprising:
if the overlapping is that a first slot in the SBFD time-frequency resource overlaps with a second slot in the uplink time-frequency resource, and physical resource blocks (PRBs) in the first slot do not overlap with PRBs in the second slot, when the FD capability is a FD mode, selecting the PRBs in the first slot as the available time-frequency resource; when the FD capability is a non-FD mode, selecting the available time-frequency resource from the SBFD time-frequency resource based on the FD capability of the UE and a signal type or a channel type carried on the uplink time-frequency resource.

5. The method according to claim 3 or 4, wherein the signal type or the channel type carried on the uplink time-frequency resource comprises:
sounding reference signal (SRS), physical random access channel (PRACH), physical uplink control channel (PUCCH), physical uplink shared channel (PUSCH).

6. The method according to claim 1, further comprising:
if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical random access channel (PRACH) and the FD capability is a non-FD mode, determining that the SBFD time-frequency resource is an unavailable time-frequency resource.

7. The method according to claim 3, wherein,
if the overlapping is that the first slot in the SBFD time-frequency resource overlaps with the second slot in the uplink time-frequency resource, and the PRBs in the first slot overlap with the PRBs in the second slot, if the channel type carried on the uplink time-frequency resource is physical random access channel (PRACH) and the FD capability is a FD mode, determining that the SBFD time-frequency resource is an unavailable time-frequency resource.

8. The method according to claim 1, further comprising:
if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a non-FD mode, and a channel type carried on the uplink time-frequency resource is physical random access channel (PRACH), determining that the SBFD time-frequency resource is an unavailable time-frequency resource.

9. The method according to claim 4, wherein,
if the PRBs in the first slot do not overlap with the PRBs in the second slot, selecting the PRBs in the first slot as the available time-frequency resource comprises: if the FD capability is the FD mode, and the channel type carried on the uplink time-frequency resource is physical random access channel (PRACH), selecting all PRBs in the first slot of the SBFD time-frequency resource as the available time-frequency resource.

10. The method according to claim 1, further comprising:
if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a FD mode, and a channel type carried on the uplink time-frequency resource is physical random access channel (PRACH), determining that the SBFD time-frequency resource is an unavailable time-frequency resource.

11. The method according to claim 1, further comprising:
if the overlapping is that a first slot in the SBFD time-frequency resource overlaps with a second slot in the uplink time-frequency resource, and physical resource blocks (PRBs) in the first slot overlap with PRBs in the second slot, if a signal type carried on the uplink time-frequency resource is sounding reference signal (SRS), and the FD capability is a non-FD mode, determining that the SBFD time-frequency resource is an unavailable time-frequency resource.

12. The method according to claim 3, wherein,
if the PRBs in the first slot overlap with the PRBs in the second slot, selecting the available time-frequency resource from the SBFD time-frequency resource based on the FD capability of the UE and the signal type or the channel type carried on the uplink time-frequency resource, comprising:
if the signal type carried on the uplink time-frequency resource is sounding reference signal (SRS), and the FD capability is a FD mode, selecting one or more first target PRBs in the first slot of the SBFD time-frequency resource as the available time-frequency resource, wherein the one or more first target PRBs are PRBs in symbols which are not occupied by the uplink time-frequency resource.

13. The method according to claim 1, further comprising:
if the overlapping is that a first slot in the SBFD time-frequency resource overlaps with a second slot in the uplink time-frequency resource, and physical resource blocks (PRBs) in the first slot overlap with PRBs in the second slot, if a signal type carried on the uplink time-frequency resource is sounding reference signal (SRS), and the FD capability is a FD mode, for each repetition of transmitted downlink data corresponding to the PDSCH,
selecting one or more second target PRBs in the first slot of the SBFD time-frequency resource as the available time-frequency resource, and sending the repetition of transmitted downlink data through the available time-frequency resource; wherein the one or more second target PRBs are PRBs in symbols which are not occupied by the uplink time-frequency resource.

14. The method according to claim 1, further comprising:
if the overlapping is that a first slot in the SBFD time-frequency resource overlaps with a second slot in the uplink time-frequency resource, and physical resource blocks (PRBs) in the first slot overlap with PRBs in the second slot, if a signal type carried on the uplink time-frequency resource is sounding reference signal (SRS), and the FD capability is a FD mode, for each repetition of transmitted downlink data corresponding to the PDSCH,
selecting one or more third target PRBs in the first slot of the SBFD time-frequency resource as the available time-frequency resource, and sending the repetition of transmitted downlink data through the available time-frequency resource; wherein the one or more third target PRBs are PRBs which are not occupied by the uplink time-frequency resource.

15. The method according to claim 3, wherein,
if the PRBs in the first slot overlap with the PRBs in the second slot, selecting the available time-frequency resource from the SBFD time-frequency resource based on the FD capability of the UE and the signal type or the channel type carried on the uplink time-frequency resource, comprising:
if the signal type carried on the uplink time-frequency resource is sounding reference signal (SRS), and the FD capability is a FD mode, selecting one or more fourth target PRBs from the first slot of the SBFD time-frequency resource, wherein the one or more fourth target PRBs comprise a first resource element (RE) resource which is not occupied by the uplink time-frequency resource and a second RE resource which is occupied by the uplink time-frequency resource, and selecting the first RE resource of the one or more fourth target PRBs as the available time-frequency resource.

16. The method according to claim 1, further comprising:
if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a non-FD mode, and a signal type carried on the uplink time-frequency resource is sounding reference signal (SRS), determining that the SBFD time-frequency resource is an unavailable time-frequency resource.

17. The method according to claim 4, wherein,
if the PRBs in the first slot do not overlap with the PRBs in the second slot, selecting the PRBs in the first slot as the available time-frequency resource comprises: if the FD capability is the FD mode, and the signal type carried on the uplink time-frequency resource is sounding reference signal (SRS), selecting all PRBs in the first slot of the SBFD time-frequency resource as the available time-frequency resource.

18. The method according to claim 1, further comprising:
if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical uplink control channel (PUCCH), and the FD capability is a non-FD mode, determining that the SBFD time-frequency resource is an unavailable time-frequency resource.

19. The method according to claim 3, wherein,
if the PRBs in the first slot overlap with the PRBs in the second slot, selecting the available time-frequency resource from the SBFD time-frequency resource based on the FD capability of the UE and the signal type or the channel type carried on the uplink time-frequency resource, comprising:
if the channel type carried on the uplink time-frequency resource is physical uplink control channel (PUCCH), and the FD capability is a FD mode, selecting one or more first target PRBs in the first slot of the SBFD time-frequency resource as the available time-frequency resource, wherein the one or more first target PRBs are PRBs in symbols which are not occupied by the uplink time-frequency resource.

20. The method according to claim 1, further comprising:
if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical uplink control channel (PUCCH), and the FD capability is a FD mode, for each repetition of transmitted downlink data corresponding to the PDSCH,
selecting one or more second target PRBs in the first slot of the SBFD time-frequency resource as the available time-frequency resource, and sending the repetition of transmitted downlink data through the available time-frequency resource; wherein the one or more second target PRBs are PRBs in symbols which are not occupied by the uplink time-frequency resource.

21. The method according to claim 1, further comprising:
if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical uplink control channel (PUCCH), and the FD capability is a FD mode, for each repetition of transmitted downlink data corresponding to the PDSCH,
selecting one or more third target PRBs in the first slot of the SBFD time-frequency resource as the available time-frequency resource, and sending the repetition of transmitted downlink data through the available time-frequency resource; wherein the one or more third target PRBs are PRBs which are not occupied by the uplink time-frequency resource.

22. The method according to claim 3, wherein,
if the PRBs in the first slot overlap with the PRBs in the second slot, selecting the available time-frequency resource from the SBFD time-frequency resource based on the FD capability of the UE and the signal type or the channel type carried on the uplink time-frequency resource, comprising:
if the channel type carried on the uplink time-frequency resource is physical uplink control channel (PUCCH), and the FD capability is a FD mode, selecting one or more fourth target PRBs from the first slot of the SBFD time-frequency resource, wherein the one or more fourth target PRBs are PRBs which are not occupied by the uplink time-frequency resource, and selecting the one or more fourth target PRBs as the available time-frequency resource.

23. The method according to claim 1, further comprising:
if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a non-FD mode, and a channel type carried on the uplink time-frequency resource is physical uplink control channel (PUCCH), determining that the SBFD time-frequency resource is an unavailable time-frequency resource.

24. The method according to claim 4, wherein,
if the PRBs in the first slot do not overlap with the PRBs in the second slot, selecting the PRBs in the first slot as the available time-frequency resource comprises: if the FD capability is the FD mode, and the channel type carried on the uplink time-frequency resource is physical uplink control channel (PUCCH), selecting all PRBs in the first slot of the SBFD time-frequency resource as the available time-frequency resource.

25. The method according to claim 1, wherein, if the overlapping is that a first slot in the SBFD time-frequency resource overlaps with a second slot in the uplink time-frequency resource, and physical resource blocks (PRBs) in the first slot overlap with PRBs in the second slot or the PRBs in the first slot do not overlap with the PRBs in the second slot, the method further comprises:
if a channel type carried on the uplink time-frequency resource is physical uplink shared channel (PUSCH), and the FD capability is a non-FD mode, determining data corresponding to the PUSCH carried on the uplink time-frequency resource; and
if the data is data for random access, determining that the SBFD time-frequency resource is an unavailable time-frequency resource.

26. The method according to claim 25, wherein if the data is data not for random access, the method further comprises:
determining a first scheduling type corresponding to the PUSCH carried on the uplink time-frequency resource;
determining a second scheduling type corresponding to the PDSCH carried on the SBFD time-frequency resource; and
if the first scheduling type is dynamic scheduling and the second scheduling type is semi-static scheduling, determining that the SBFD time-frequency resource is an unavailable time-frequency resource; if the first scheduling type is semi-static scheduling and the second scheduling type is dynamic scheduling, selecting all PRBs in the SBFD time-frequency resource as the available time-frequency resource.

27. The method according to claim 26, wherein if both the first scheduling type and the second scheduling type are dynamic scheduling, or both the first scheduling type and the second scheduling type are semi-static scheduling, the method further comprises:
determining a first priority corresponding to the PUSCH carried on the uplink time-frequency resource;
determining a second priority corresponding to the PDSCH carried on the SBFD time-frequency resource; and
if the first priority is greater than the second priority, determining that the SBFD time-frequency resource is an unavailable time-frequency resource; if the first priority is lower than the second priority, selecting all PRBs in the SBFD time-frequency resource as the available time-frequency resource.

28. The method according to claim 27, wherein if the first priority is equal to the second priority, the method further comprises:
if the PUSCH carried on the uplink time-frequency resource corresponds to initially-transmitted data, and the PDSCH carried on the SBFD time-frequency resource corresponds to retransmission data, determining that the SBFD time-frequency resource is an unavailable time-frequency resource;
if the PUSCH carried on the uplink time-frequency resource corresponds to retransmission data, and the PDSCH carried on the SBFD time-frequency resource corresponds to initially-transmitted data, selecting all PRBs in the SBFD time-frequency resource as the available time-frequency resource;
if the PUSCH carried on the uplink time-frequency resource corresponds to initially-transmitted data, and the PDSCH carried on the SBFD time-frequency resource corresponds to initially-transmitted data, selecting all PRBs in the SBFD time-frequency resource as the available time-frequency resource; or
if the PUSCH carried on the uplink time-frequency resource corresponds to retransmission data, and the PDSCH carried on the SBFD time-frequency resource corresponds to retransmission data, selecting all PRBs in the SBFD time-frequency resource as the available time-frequency resource.

29. The method according to claim 3, wherein,
if the PRBs in the first slot overlap with the PRBs in the second slot, selecting the available time-frequency resource from the SBFD time-frequency resource based on the FD capability of the UE and the signal type or the channel type carried on the uplink time-frequency resource, comprising:
if the channel type carried on the uplink time-frequency resource is physical uplink shared channel (PUSCH), and the FD capability is a FD mode, selecting all PRBs in the first slot of the SBFD time-frequency resource as the available time-frequency resource.

30. The method according to claim 4, wherein,
if the PRBs in the first slot do not overlap with the PRBs in the second slot, selecting the PRBs in the first slot as the available time-frequency resource comprises: if the FD capability is the FD mode, and the channel type carried on the uplink time-frequency resource is physical uplink shared channel (PUSCH), selecting all PRBs in the first slot of the SBFD time-frequency resource as the available time-frequency resource.

31. A data transmission apparatus, applied to a base station, the apparatus comprising:
a determining module, configured to determine an overlapping between a sub-band full duplex (SBFD) time-frequency resource and an uplink time-frequency resource;
an obtaining module, configured to select, based on the overlapping and a full duplex (FD) capability of a user equipment (UE), an available time-frequency resource from the SBFD time-frequency resource; and
a transmitting module, configured to transmit downlink data corresponding to a physical downlink shared channel (PDSCH) on the available time-frequency resource.

32. The apparatus according to claim 31, wherein, when selecting, based on the overlapping and the FD capability of the UE, the available time-frequency resource from the SBFD time-frequency resource, the obtaining module is specifically configured to:
if the overlapping is that a first slot in the SBFD time-frequency resource does not overlap with a second slot in the uplink time-frequency resource, when the FD capability is a FD mode or a non-FD mode, select the first slot in the SBFD time-frequency resource as the available time-frequency resource .

33. The apparatus according to claim 31, wherein, when selecting, based on the overlapping and the FD capability of the UE, the available time-frequency resource from the SBFD time-frequency resource, the obtaining module is specifically configured to:
if the overlapping is that a first slot in the SBFD time-frequency resource overlaps with a second slot in the uplink time-frequency resource, and physical resource blocks (PRBs) in the first slot overlap with PRBs in the second slot, select the available time-frequency resource from the SBFD time-frequency resource based on the FD capability of the UE and a signal type or a channel type carried on the uplink time-frequency resource.

34. The apparatus according to claim 31, wherein, when selecting, based on the overlapping and the FD capability of the UE, the available time-frequency resource from the SBFD time-frequency resource, the obtaining module is specifically configured to:
if the overlapping is that a first slot in the SBFD time-frequency resource overlaps with a second slot in the uplink time-frequency resource, and physical resource blocks (PRBs) in the first slot do not overlap with PRBs in the second slot, when the FD capability is a FD mode, select the PRBs in the first slot as the available time-frequency resource; when the FD capability is a non-FD mode, select the available time-frequency resource from the SBFD time-frequency resource based on the FD capability of the UE and a signal type or a channel type carried on the uplink time-frequency resource.

35. The apparatus according to claim 33 or 34, wherein the signal type or the channel type carried on the uplink time-frequency resource comprises:
sounding reference signal (SRS), physical random access channel (PRACH), physical uplink control channel (PUCCH), physical uplink shared channel (PUSCH).

36. The apparatus according to claim 31, wherein the obtaining module is further configured to:
if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical random access channel (PRACH) and the FD capability is a non-FD mode, determine that the SBFD time-frequency resource is an unavailable time-frequency resource.

37. The apparatus according to claim 33, wherein the obtaining module is further configured to:
if the overlapping is that the first slot in the SBFD time-frequency resource overlaps with the second slot in the uplink time-frequency resource, and the PRBs in the first slot overlap with the PRBs in the second slot, if the channel type carried on the uplink time-frequency resource is physical random access channel (PRACH) and the FD capability is a FD mode, determine that the SBFD time-frequency resource is an unavailable time-frequency resource.

38. The apparatus according to claim 31, wherein the obtaining module is further configured to:
if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a non-FD mode, and a channel type carried on the uplink time-frequency resource is physical random access channel (PRACH), determine that the SBFD time-frequency resource is an unavailable time-frequency resource.

39. The apparatus according to claim 34, wherein, when selecting, if the PRBs in the first slot do not overlap with the PRBs in the second slot, the PRBs in the first slot as the available time-frequency resource, the obtaining module is specifically configured to: if the FD capability is the FD mode, and the channel type carried on the uplink time-frequency resource is physical random access channel (PRACH), select all PRBs in the first slot of the SBFD time-frequency resource as the available time-frequency resource.

40. The apparatus according to claim 31, wherein the obtaining module is further configured to:
if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a FD mode, and a channel type carried on the uplink time-frequency resource is physical random access channel (PRACH), determine that the SBFD time-frequency resource is an unavailable time-frequency resource.

41. The apparatus according to claim 31, wherein the obtaining module is further configured to:
if the overlapping is that a first slot in the SBFD time-frequency resource overlaps with a second slot in the uplink time-frequency resource, and physical resource blocks (PRBs) in the first slot overlap with PRBs in the second slot, if a signal type carried on the uplink time-frequency resource is sounding reference signal (SRS), and the FD capability is a non-FD mode, determine that the SBFD time-frequency resource is an unavailable time-frequency resource.

42. The apparatus according to claim 43, wherein, when selecting, if the PRBs in the first slot overlap with the PRBs in the second slot, the available time-frequency resource from the SBFD time-frequency resource based on the FD capability of the UE and the signal type or the channel type carried on the uplink time-frequency resource, the obtaining module is specifically configured to:
if the signal type carried on the uplink time-frequency resource is sounding reference signal (SRS), and the FD capability is a FD mode, select one or more first target PRBs in the first slot of the SBFD time-frequency resource as the available time-frequency resource, wherein the one or more first target PRBs are PRBs in symbols which are not occupied by the uplink time-frequency resource.

43. The apparatus according to claim 31, wherein the obtaining module is further configured to:
if the overlapping is that a first slot in the SBFD time-frequency resource overlaps with a second slot in the uplink time-frequency resource, and a physical resource blocks (PRBs) in the first slot overlap with PRBs in the second slot, if a signal type carried on the uplink time-frequency resource is sounding reference signal (SRS), and the FD capability is a FD mode, for each repetition of transmitted downlink data corresponding to the PDSCH, select one or more second target PRBs in the first slot of the SBFD time-frequency resource as the available time-frequency resource, and send the repetition of transmitted downlink data through the available time-frequency resource; wherein the one or more second target PRBs are PRBs in symbols which are not occupied by the uplink time-frequency resource.

44. The apparatus according to claim 31, wherein the obtaining module is further configured to:
if the overlapping is that a first slot in the SBFD time-frequency resource overlaps with a second slot in the uplink time-frequency resource, and physical resource blocks (PRBs) in the first slot overlap with PRBs in the second slot, if a signal type carried on the uplink time-frequency resource is sounding reference signal (SRS), and the FD capability is a FD mode, for each repetition of transmitted downlink data corresponding to the PDSCH, select one or more third target PRBs in the first slot of the SBFD time-frequency resource as the available time-frequency resource, and send the repetition of transmitted downlink data through the available time-frequency resource; wherein the one or more third target PRBs are PRBs which are not occupied by the uplink time-frequency resource.

45. The apparatus according to claim 33, wherein, when selecting, if the PRBs in the first slot overlap with the PRBs in the second slot, the available time-frequency resource from the SBFD time-frequency resource based on the FD capability of the UE and the signal type or the channel type carried on the uplink time-frequency resource, the obtaining module is specifically configured to:
if the signal type carried on the uplink time-frequency resource is sounding reference signal (SRS), and the FD capability is a FD mode, select one or more fourth target PRBs from the first slot of the SBFD time-frequency resource, wherein the one or more fourth target PRBs comprise a first resource element (RE) resource which is not occupied by the uplink time-frequency resource and a second RE resource which is occupied by the uplink time-frequency resource, and select the first RE resource of the one or more fourth target PRBs as the available time-frequency resource.

46. The apparatus according to claim 31, wherein the obtaining module is further configured to:
if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a non-FD mode, and a signal type carried on the uplink time-frequency resource is sounding reference signal (SRS), determine that the SBFD time-frequency resource is an unavailable time-frequency resource.

47. The apparatus according to claim 34, wherein, when selecting, if the PRBs in the first slot do not overlap with the PRBs in the second slot, the PRBs in the first slot as the available time-frequency resource, the obtaining module is specifically configured to: if the FD capability is the FD mode, and the signal type carried on the uplink time-frequency resource is sounding reference signal (SRS), select all PRBs in the first slot of the SBFD time-frequency resource as the available time-frequency resource.

48. The apparatus according to claim 31, wherein the obtaining module is further configured to:
if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical uplink control channel (PUCCH), and the FD capability is a non-FD mode, determine that the SBFD time-frequency resource is an unavailable time-frequency resource.

49. The apparatus according to claim 33, wherein, when selecting, if the PRBs in the first slot overlap with the PRBs in the second slot, the available time-frequency resource from the SBFD time-frequency resource based on the FD capability of the UE and the signal type or the channel type carried on the uplink time-frequency resource, the obtaining module is specifically configured to: if the channel type carried on the uplink time-frequency resource is physical uplink control channel (PUCCH), and the FD capability is a FD mode, select one or more first target PRBs in the first slot of the SBFD time-frequency resource as the available time-frequency resource, wherein the one or more first target PRBs are PRBs in symbols which are not occupied by the uplink time-frequency resource.

50. The apparatus according to claim 31, wherein the obtaining module is further configured to:
if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical uplink control channel (PUCCH), and the FD capability is a FD mode, for each repetition of transmitted downlink data corresponding to the PDSCH, select one or more second target PRBs in the first slot of the SBFD time-frequency resource as the available time-frequency resource, and send the repetition of transmitted downlink data through the available time-frequency resource; wherein the one or more second target PRBs are PRBs in symbols which are not occupied by the uplink time-frequency resource.

51. The apparatus according to claim 31, wherein the obtaining module is further configured to:
if the overlapping is that a first slot in the SBFD time-frequency resource overlaps with a second slot in the uplink time-frequency resource, and physical resource blocks (PRBs) in the first slot overlap with PRBs in the second slot, if a channel type carried on the uplink time-frequency resource is physical uplink control channel (PUCCH), and the FD capability is a FD mode, for each repetition of transmitted downlink data corresponding to the PDSCH, select one or more third target PRBs in the first slot of the SBFD time-frequency resource as the available time-frequency resource, and send the repetition of transmitted downlink data through the available time-frequency resource; wherein the one or more third target PRBs are PRBs which are not occupied by the uplink time-frequency resource.

52. The apparatus according to claim 33, wherein, when selecting, if the PRBs in the first slot overlap with the PRBs in the second slot, the available time-frequency resource from the SBFD time-frequency resource based on the FD capability of the UE and the signal type or the channel type carried on the uplink time-frequency resource, the obtaining module is specifically configured to:
if the channel type carried on the uplink time-frequency resource is physical uplink control channel (PUCCH), and the FD capability is a FD mode, select one or more fourth target PRBs from the first slot of the SBFD time-frequency resource, wherein the one or more fourth target PRBs are PRBs which are not occupied by the uplink time-frequency resource, and select the one or more fourth target PRBs as the available time-frequency resource.

53. The apparatus according to claim 31, wherein the obtaining module is further configured to:
if the overlapping is that a first slot in the SBFD time-frequency resource overlaps with a second slot in the uplink time-frequency resource, and physical resource blocks (PRBs) in the first slot do not overlap with PRBs in the second slot, if the FD capability is a non-FD mode, and a channel type carried on the uplink time-frequency resource is physical uplink control channel (PUCCH), determine that the SBFD time-frequency resource is an unavailable time-frequency resource.

54. The apparatus according to claim 34, wherein, when selecting, if the PRBs in the first slot do not overlap with the PRBs in the second slot, the PRBs in the first slot as the available time-frequency resource, the obtaining module is specifically configured to:
if the FD capability is the FD mode, and the channel type carried on the uplink time-frequency resource is physical uplink control channel (PUCCH), select all PRBs in the first slot of the SBFD time-frequency resource as the available time-frequency resource.

55. The apparatus according to claim 31, wherein, if the overlapping is that a first slot in the SBFD time-frequency resource overlaps with a second slot in the uplink time-frequency resource, and physical resource blocks (PRBs) in the first slot overlap with PRBs in the second slot or the PRBs in the first slot do not overlap with the PRBs in the second slot, the obtaining module is further configured to:
if a channel type carried on the uplink time-frequency resource is physical uplink shared channel (PUSCH), and the FD capability is a non-FD mode, determine data corresponding to the PUSCH carried on the uplink time-frequency resource; and
if the data is data for random access, determine that the SBFD time-frequency resource is an unavailable time-frequency resource.

56. The apparatus according to claim 55, wherein if the data is data not for random access, the obtaining module is further configured to:
determine a first scheduling type corresponding to the PUSCH carried on the uplink time-frequency resource;
determine a second scheduling type corresponding to the PDSCH carried on the SBFD time-frequency resource; and
if the first scheduling type is dynamic scheduling and the second scheduling type is semi-static scheduling, determine that the SBFD time-frequency resource is an unavailable time-frequency resource; if the first scheduling type is semi-static scheduling and the second scheduling type is dynamic scheduling, select all PRBs in the SBFD time-frequency resource as the available time-frequency resource.

57. The apparatus according to claim 56, wherein if both the first scheduling type and the second scheduling type are dynamic scheduling, or both the first scheduling type and the second scheduling type are semi-static scheduling, the obtaining module is further configured to:
determine a first priority corresponding to the PUSCH carried on the uplink time-frequency resource;
determine a second priority corresponding to the PDSCH carried on the SBFD time-frequency resource; and
if the first priority is greater than the second priority, determine that the SBFD time-frequency resource is an unavailable time-frequency resource; if the first priority is lower than the second priority, select all PRBs in the SBFD time-frequency resource as the available time-frequency resource.

58. The apparatus according to claim 57, wherein if the first priority is equal to the second priority, the obtaining module is further configured to:
if the PUSCH carried on the uplink time-frequency resource corresponds to initially-transmitted data, and the PDSCH carried on the SBFD time-frequency resource corresponds to retransmission data, determine that the SBFD time-frequency resource is an unavailable time-frequency resource;
if the PUSCH carried on the uplink time-frequency resource corresponds to retransmission data, and the PDSCH carried on the SBFD time-frequency resource corresponds to initially-transmitted data, select all PRBs in the SBFD time-frequency resource as the available time-frequency resource;
if the PUSCH carried on the uplink time-frequency resource corresponds to initially-transmitted data, and the PDSCH carried on the SBFD time-frequency resource corresponds to initially-transmitted data, select all PRBs in the SBFD time-frequency resource as the available time-frequency resource; or
if the PUSCH carried on the uplink time-frequency resource corresponds to retransmission data, and the PDSCH carried on the SBFD time-frequency resource corresponds to retransmission data, select all PRBs in the SBFD time-frequency resource as the available time-frequency resource.

59. The apparatus according to claim 33, wherein, when selecting, if the PRBs in the first slot overlap with the PRBs in the second slot, the available time-frequency resource from the SBFD time-frequency resource based on the FD capability of the UE and the signal type or the channel type carried on the uplink time-frequency resource, the obtaining module is specifically configured to:
if the channel type carried on the uplink time-frequency resource is physical uplink shared channel (PUSCH), and the FD capability is a FD mode, select all PRBs in the first slot of the SBFD time-frequency resource as the available time-frequency resource.

60. The apparatus according to claim 34, wherein, when selecting, if the PRBs in the first slot do not overlap with the PRBs in the second slot, the PRBs in the first slot as the available time-frequency resource, the obtaining module is specifically configured to: if the FD capability is the FD mode, and the channel type carried on the uplink time-frequency resource is physical uplink shared channel (PUSCH), select all PRBs in the first slot of the SBFD time-frequency resource as the available time-frequency resource.

61. A base station, comprising a processor and a machine readable storage medium, wherein the machine readable storage medium stores machine executable instructions executable by the processor; the processor is configured to execute the machine executable instructions to implement the method according to any one of claims 1-30.
